# EUROPEAN PATENT SPECIFICATION

(11) **EP 2 905 692 B1**
(45) Date of publication and mention of the grant of the patent: **20.03.2019**
(21) Application number: 15151034.4
(22) Date of filing: 14.01.2015
(51) Int. Cl.: G06F 3/0488, G06F 3/0482, G06F 3/0485

(54) **Information processing apparatus, information processing method, and program**
Informationsverarbeitungsvorrichtung, Informationsverarbeitungsverfahren und Programm
Appareil et procédé de traitement d'informations et programme

(30) Priority: 07.02.2014 JP 2014022261
(43) Date of publication of application: 12.08.2015
(73) Proprietor: Sony Corporation, Tokyo 108-0075 (JP)
(72) Inventor: Takimoto, Yuuji, Tokyo, 108-0075 (JP)
(74) Representative: MFG Patentanwälte Meyer-Wildhagen Meggle-Freund Gerhard PartG mbB

(56) References cited:
- US-A1- 2008 222 558
- US-A1- 2009 100 373

## Description

### CROSS REFERENCE TO RELATED APPLICATIONS

This application claims the benefit of Japanese Priority Patent Application JP 2014-022261 filed February 7, 2014.

### BACKGROUND

The present disclosure relates to an information processing apparatus, an information processing method, and a program for transitioning and displaying an image.

In recent years, much content such as photos and music can be retained in information terminal apparatuses such as smartphones and tablet terminals due to expansion of storage regions, improvement in processing performance of CPUs, and high definition and an increase in the sizes of screens, and thus much content can be simultaneously displayed on screens. In such portable terminal apparatuses, when displayed content is not contained on the entire screen, the entire content can be viewed, for example, by performing a transition manipulation such as scrolling on a portion displaying the screen.

As a transition control method of transitioning displayed content, for example, as disclosed in JP H10-161628A, a control method of scrolling a display screen according to a vector based on a change vector of input coordinates has been disclosed.

Still further, US 20080222558 A1 discloses an apparatus and method of providing items based on scrolling, and US 20090100373 A1 discloses systems and methods that provide a user interface for scrolling through lists of information on user interfaces.

### SUMMARY

To find target content among a large amount of content, a scroll amount increases in some cases. At this time, increasing a scroll speed so that the target content can be found quickly can be considered.

In the technology disclosed in JP H10-161628A, however, the transition of the content is too fast in some cases, and thus it is difficult to confirm the details of the content. For this reason, the target content may not be found quickly.

It is desirable to provide a novel and improved information processing apparatus, an information processing method, and a program capable of finding target content quickly among content transitioning at a high speed.

The invention is set out in the appended set of claims.

### BRIEF DESCRIPTION OF THE DRAWINGS

Embodiments of the invention will now be described with reference to the accompanying drawings, throughout which like parts are referred to by like references, and in which:
FIG. 1 is an explanatory diagram illustrating a first display example in an information processing apparatus according to a first embodiment of the present disclosure;
FIG. 2 is a block diagram illustrating the configuration of the information processing apparatus according to the embodiment;
FIG. 3 is an explanatory diagram illustrating a basic display example in the information processing apparatus according to the embodiment;
FIG. 4 is a flowchart illustrating the first display example in the information processing apparatus according to the embodiment;
FIG. 5 is an explanatory diagram illustrating display according to a difference in a transition manipulation amount in the display example;
FIG. 6 is an explanatory diagram illustrating display according to a selection manipulation performed after a transition manipulation in the display example;
FIG. 7 is an explanatory diagram illustrating a UI at an end position of an image capable of transition display in the display example;
FIG. 8 is a flowchart illustrating a second display example in the information processing apparatus according to the embodiment;
FIG. 9 is an explanatory diagram illustrating the display example;
FIG. 10 is an explanatory diagram illustrating a modification example of the display example;
FIG. 11 is a flowchart illustrating a third display example in the information processing apparatus according to the embodiment;
FIG. 12 is an explanatory diagram illustrating a fourth display example in the information processing apparatus according to the embodiment;
FIG. 13 is an explanatory diagram illustrating transition in an information processing apparatus according to a second embodiment of the present disclosure;
FIG. 14 is an explanatory diagram illustrating a first display example in the information processing apparatus according to the embodiment;
FIG. 15 is an explanatory diagram illustrating display according to a selection manipulation performed after a transition manipulation in the display example;
FIG. 16 is an explanatory diagram illustrating a second display example in the information processing apparatus according to the embodiment;
FIG. 17 is an explanatory diagram illustrating a third display example in the information processing apparatus according to the embodiment;
FIG. 18 is an explanatory diagram illustrating a fifth display example in the information processing apparatus according to the embodiment;
FIG. 19 is an explanatory diagram illustrating a display form of an information processing apparatus according to a third embodiment of the present disclosure;
FIG. 20 is an explanatory diagram illustrating a first display example in an information processing apparatus according to a fourth embodiment of the present disclosure;
FIG. 21 is an explanatory diagram illustrating a display form by a selection manipulation performed after a transition manipulation in the display example;
FIG. 22 is an explanatory diagram illustrating a display form by a difference in a transition manipulation amount in the display example;
FIG. 23 is an explanatory diagram illustrating a second display example in the information processing apparatus according to the embodiment;
FIG. 24 is an explanatory diagram illustrating a first display example in an information processing apparatus according to a fifth embodiment of the present disclosure;
FIG. 25 is an explanatory diagram illustrating a pattern in which a transition destination image is displayed on the right side in the display example;
FIG. 26 is an explanatory diagram illustrating a pattern in which a transition destination image is displayed on the left side in the display example;
FIG. 27 is an explanatory diagram illustrating a second display example in the information processing apparatus according to the embodiment;
FIG. 28 is an explanatory diagram illustrating a display form of an information processing apparatus according to a sixth embodiment of the present disclosure; and
FIG. 29 is a block diagram for describing a hardware configuration of an information processing apparatus.

### DETAILED DESCRIPTION OF THE EMBODIMENTS

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

The description will be made in the following order.
1. First embodiment (display content: still image)
   1-1. Overview
   1-2. Configuration of apparatus
   1-3. Processing flow
   1-4. Second display example (display in which form of transition destination image is changed)
   1-5. Third display example (display in which granularity is changed)
   1-6. Fourth display example (display in which transition destination image is transitioned)
2. Second embodiment (display content: map)
   2-1. First display example (basic display method)
   2-2. Second display example (display in which form of transition destination image is changed)
   2-3. Third display example (display in which granularity is changed)
   2-4. Fourth display example (display in which transition destination image is transitioned)
   2-5. Fifth display example (display in which transition information is displayed)
3. Third embodiment (display content: navigation)
4. Fourth embodiment (display content: moving image)
   4-1. First display example (basic display method)
   4-2. Second display example (display in which granularity is changed)
   4-3. Third display example (display in which transition destination image is transitioned)
5. Fifth embodiment (display content: electronic book)
   5-1. First display example (basic display method)
   5-2. Second display example (display in which granularity is changed)
   5-3. Third display example (display in which transition destination image is transitioned)
   5-4. Fourth display example (change in transition destination image)
6. Sixth embodiment (display content: mail, SNS, or the like)
7. Hardware configuration

### <1. First embodiment (display content: still image)>

### [1-1. Overview]

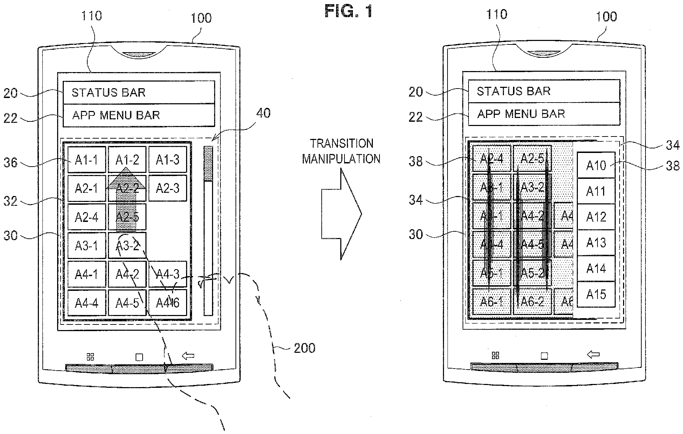

First, an overview of an information processing apparatus 100 according to a first embodiment of the present disclosure will be described with reference to FIG. 1. FIG. 1 is an explanatory diagram illustrating a first display example in the information processing apparatus 100 according to a first embodiment of the present disclosure. The left side of FIG. 1 shows a display state of a display unit 110 of the information processing apparatus 100 before a transition manipulation and the right side of FIG. 1 shows a display state of the display unit 110 of the information processing apparatus 100 after the transition manipulation.

The information processing apparatus 100 is, for example, an information processing apparatus such as a smartphone, a tablet terminal, a portable game apparatus, a media player, a car navigation apparatus, or a notebook-type PC. The information processing apparatus 100 includes a display unit 110. For example, a status bar 20 indicating an operational status of the information processing apparatus 100 and an application menu bar 22 for selecting applications are displayed on the display unit 110. A transition display image 32, a transition destination image 34, and a scroll bar 40 for manipulating the transition display image 32 are displayed in a display area 30 of the display unit 110.

The transition display image 32 displayed in the display area 30 is an image that includes, for example, a plurality of objects 36 indicating content such as still images, music, moving images, maps, books, and web sites. The display of the transition display image 32 can be transitioned by inertial scrolling or the like. Thus, for example, when there are a vast number of objects 36 and all of the objects 36 are thus not displayable in the display area 30, a user can view all of the objects 36. Transition such as inertial scrolling is performed, for example, based on a transition manipulation such as flicking manipulation or a dragging manipulation with a manipulator 200 such as a finger or a pen.

The transition destination image 34 displayed in the display area 30 is an image that includes a plurality of representative objects 38 indicating the objects 36 finally displayed in the display area 30 after the transition display image 32 or the like transitions through a transition manipulation. The transition destination image 34 is displayed in the display area 30, for example, when a transition manipulation is performed with the manipulator 200. For example, when the transition display image 32 transitions fast, it may be difficult for the user to recognize the details of the transition display image 32. Thus, when the transition display image 32 transitions, the transition destination image 34 is displayed, so that the user can recognize whether target content is present after the transition from the details of the transition destination image 34 before the transition ends and can further determine whether to transition the transition display image 32. Thus, the user can easily find the target content. By performing a selection manipulation on the representative object 38 of the transition destination image 34, the transition to a transition destination corresponding to the selected representative object 38 may be performed. Hereinafter, the configuration and a processing flow of the information processing apparatus 100 according to the embodiment will be described in detail.

### [1-2. Configuration of apparatus]

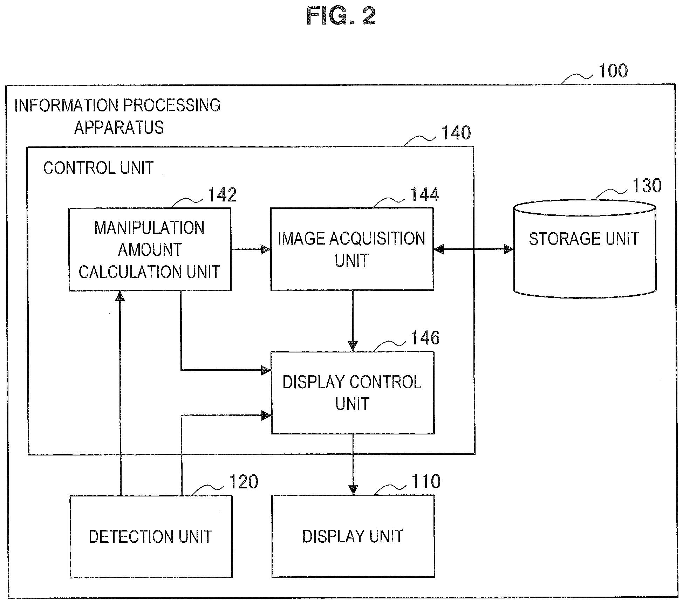

An overall configuration of the information processing apparatus 100 according to the embodiment will be described with reference to FIGS. 1 and 2. FIG. 2 is a block diagram illustrating the configuration of the information processing apparatus 100 according to the embodiment.

The information processing apparatus 100 includes the display unit 110, a detection unit 120, a storage unit 130, and a control unit 140.

The display unit 110 is, for example, a display device such as a liquid crystal display (LCD) or an organic electro-luminescence (EL) display. The display unit 110 displays various images under the control of a display control unit 146 of the control unit 140 to be described below to present the images to the user.

The detection unit 120 detects a manipulation input on the information processing apparatus 100. The detection unit 120 detects, as a manipulation input, for example, a transition manipulation of transitioning an image displayed on the display unit 110 or a selection manipulation of selecting a certain area of the display unit 110 with the manipulator 200. For example, the transition manipulation corresponds to a touch manipulation or a proximity manipulation detected by various touch sensors or proximity sensors of an optical type or an electrostatic capacitance type, a remote manipulation detected by a remote sensor such as a camera, and an input manipulation detected by an input device such as a keyboard or a mouse. For example, a touch manipulation, a proximity manipulation, a remote manipulation, or an input manipulation corresponds to the selection manipulation, as in the transition manipulation. For example, the display unit 110 and the detection unit 120 may be integrated as in a touch screen display.

The storage unit 130 is, for example, a semiconductor memory or a hard disk drive (HDD). The storage unit 130 stores data of various kinds of content used in the information processing apparatus 100. The storage unit 130 may include a removable recording medium connected to the information processing apparatus 100 or a recording medium included in a server or the like connected by a communication unit (not illustrated) via a network.

The control unit 140 is a processor such as central processing unit (CPU) and operates according to a program stored in the storage unit 130 to control each unit of the information processing apparatus 100. The control unit 140 includes, for example, a manipulation amount calculation unit 142, an image acquisition unit 144, and the display control unit 146.

The manipulation amount calculation unit 142 calculates a transition manipulation amount of a transition manipulation detected by the detection unit 120. The transition manipulation amount is, for example, a movement amount of the manipulator 200, a manipulation speed, a touch pressure at the time of a touch manipulation, the number of touch points of the manipulator 200, the number of manipulations, or a manipulation time. The manipulation amount calculation unit 142 outputs the calculated transition manipulation amount to the image acquisition unit 144 and the display control unit 146.

The image acquisition unit 144 acquires, from the storage unit 130, the transition destination image 34 associated with the transition display image 32 finally displayed on the display unit 110 after the transition through a transition manipulation based on the transition manipulation amount calculated by the manipulation amount calculation unit 142. The image acquisition unit 144 outputs the acquired transition destination image 34 to the display control unit 146.

The display control unit 146 displays, for example, the transition display image 32, the transition destination image 34, and the scroll bar 40 in the display area 30. The display control unit 146 may transition the transition display image 32 based on a detection result of the detection unit 120. The display control unit 146 transitions the transition display image 32 to a transition destination corresponding to the selected representative object 38 based on the selection manipulation on the representative object 38 of the transition destination image 34 detected by the detection unit 120. The display control unit 146 may change and display a display form such as the shape, size, or color of the transition destination image 34, for example, based on the transition manipulation amount calculated by the manipulation amount calculation unit 142.

For example, the information processing apparatus 100 can supply the user with content such as a web page, a still image, a moving image, or music by displaying an image on the display unit 110 or outputting audio from a speaker (not illustrated).

### [1-3. Processing flow]

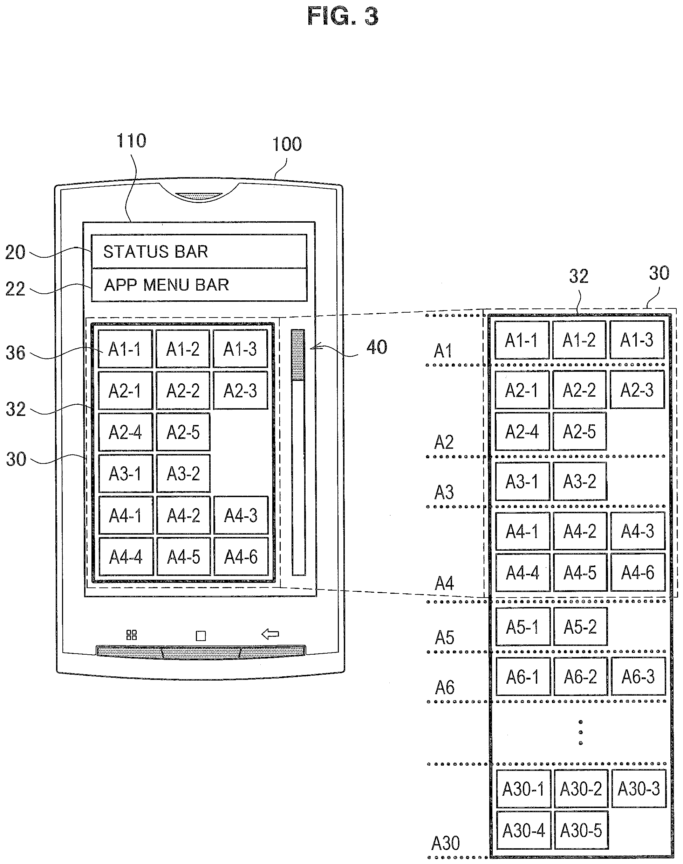

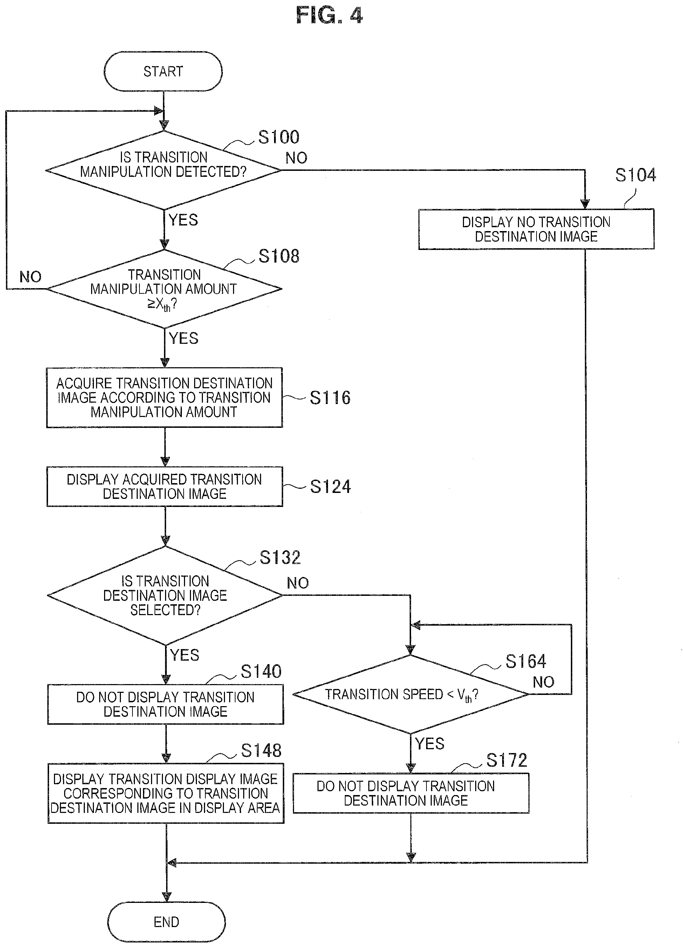

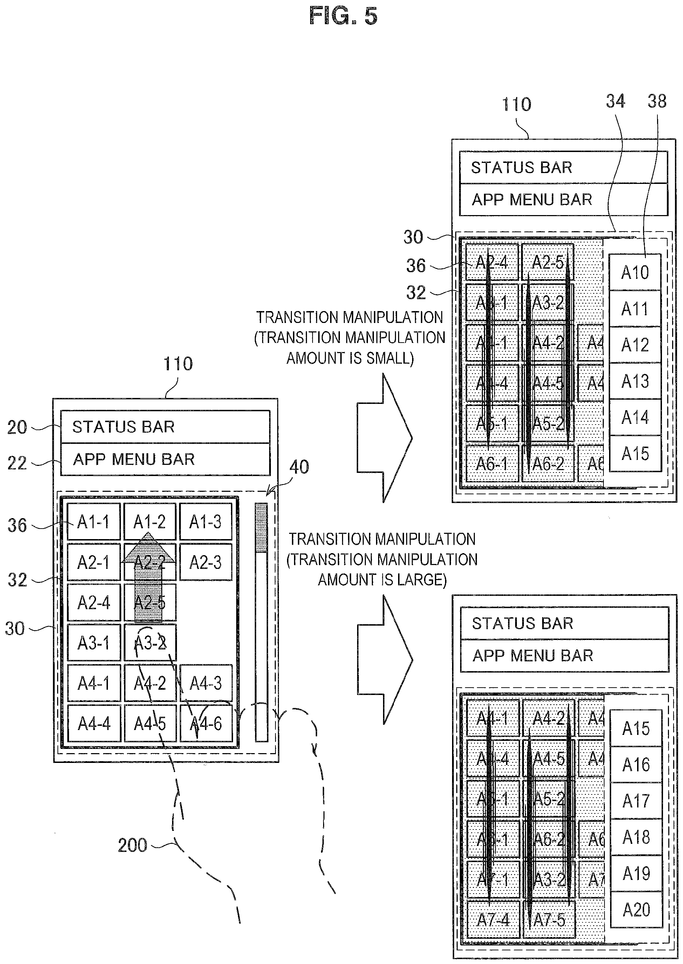

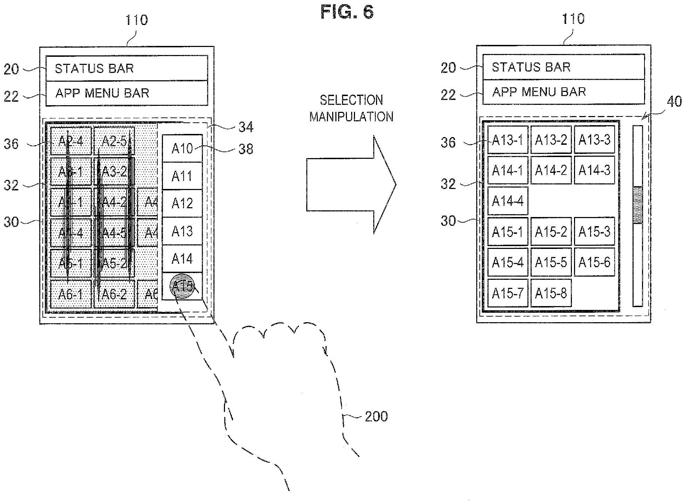

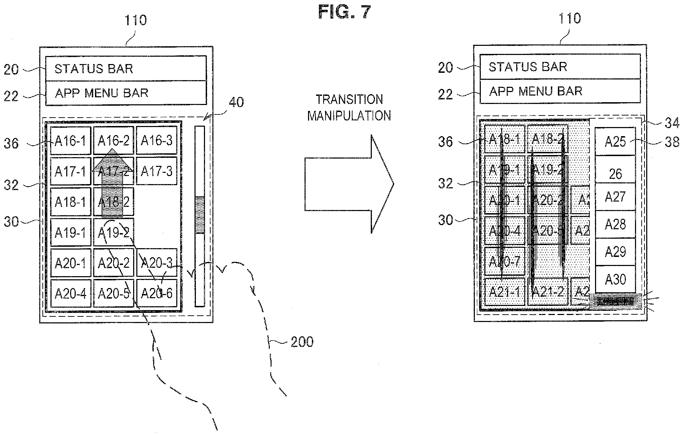

Next, the information processing apparatus 100 according to the embodiment will be described with reference to FIGS. 1 to 7. In the embodiment, as illustrated in FIG. 3, a case in which the user sets a list in which a plurality of images such as photos which are the objects 36 are arranged in the transition display image 32 and finds a target image by transitioning the display area 30 displayed in the transition display image 32 of the display unit 110 will be exemplified. FIG. 3 is an explanatory diagram illustrating one display form of the transition display image 32 in the information processing apparatus 100 according to the embodiment. FIG. 4 is a flowchart illustrating a first display example in the information processing apparatus 100 according to the embodiment. FIG. 5 is an explanatory diagram illustrating a display form according to a difference in a transition manipulation amount in the display example. FIG. 6 is an explanatory diagram illustrating a display form according to a selection manipulation performed after a transition manipulation in the display example. FIG. 7 is an explanatory diagram illustrating a user interface (UI) at an end position of an image capable of transition display in the information processing apparatus according to the embodiment.

First, one display form of the information processing apparatus 100 according to the embodiment will be described with reference to FIGS. 2 and 3. Referring to FIG. 3, the scroll bar 40 and the transition display image 32 displayed in the display area 30 are displayed on the display unit 110 of the information processing apparatus 100. Further, the status bar 20 and the application menu bar 22 are displayed on the display unit 110.

In FIG. 3, the objects 36 of the transition display image 32 are, for example, images such as photos stored in the storage unit 130. For example, the objects 36 are collected as albums A1 to A30 in units according to days on which the photos were captured, and are displayed in order according to the days on which they were captured.

In the example illustrated in FIG. 3, the objects 36 included in the albums A1 to A4 are displayed in the transition display image 32 in the display area 30. The album A1 includes, for example, photos A1-1 to A1-3 which are the objects 36 indicating three photos. For example, the user can perform a selection manipulation on any object to expand and display the photo corresponding to the selected object 36 in the display area 30.

When the number of photos displayed in the display area 30 is great, it is difficult to display all of the objects 36 in the display area 30 due to the fact that the display area 30 is limited. Therefore, for example, only a part of an area of the transition display image 32 is displayed in the display area 30. Then, the user can view the entire transition display image 32 by transitioning the transition display image 32 vertically through a transition manipulation.

In the example illustrated in FIG. 3, by transitioning the transition display image 32 downward, it is possible to display the transition display image 32 included in the albums A5 to A30 subsequent to the album A4. In the example illustrated in FIG. 3, a direction in which the transition display image 32 transitions is assumed to be the vertical direction. However, for example, the transition display image 32 may also transition in the horizontal direction. A transition speed and a transition amount at which the transition display image 32 transitions are changed according to a transition manipulation amount of a transition manipulation. For example, when the transition manipulation amount is large, the transition speed and the transition amount increase. When the transition manipulation amount is small, the transition speed and the transition amount decrease.

A first display example in the information processing apparatus 100 according to the embodiment will be described with reference to FIG. 4. In this display example, the transition destination image 34 is displayed in the display area 30 when the transition display image 32 transitions through the transition manipulation.

First, the detection unit 120 determines whether a transition manipulation is detected with the manipulator 200 (S100). In the example illustrated in FIG. 1, the detection unit 120 detects, for example, a touch manipulation on the detection unit 120 which is a touch panel of the manipulator 200 such as a finger. At this time, the detection unit 120 detects, for example, a flicking manipulation of the manipulator 200 as the transition manipulation. The detection unit 120 detects, for example, a position of the detection unit 120 touched by the manipulator 200 or a manipulation direction or a manipulation speed of the manipulator 200 as information regarding the transition manipulation.

When the determination result of step S100 indicates that no transition manipulation is detected, the image acquisition unit 144 does not acquire the transition destination image 34. Accordingly, the transition destination image 34 is not displayed in the display area 30 (S104) and the process of FIG. 4 ends.

Conversely, when the determination result of step S100 indicates that the transition manipulation is detected, the detection unit 120 outputs the detected information to the manipulation amount calculation unit 142 and the display control unit 146. Thereafter, the manipulation amount calculation unit 142 calculates a transition manipulation amount from the information regarding the transition manipulation detected by the detection unit 120 and determines whether the transition manipulation amount is equal to or greater than a threshold value (Xₜₕ) (S108). For example, the manipulation amount calculation unit 142 calculates the manipulation speed of the manipulator 200 as the transition manipulation amount. The manipulation amount calculation unit 142 may determine the manipulation amount by setting a manipulation speed of, for example, 5 centimeters per second as the threshold value (Xₜₕ).

When the determination result of step S108 indicates that the transition manipulation amount is equal to or greater than the threshold value (Xₜₕ), the image acquisition unit 144 acquires the transition destination image 34 according to the transition manipulation amount from the storage unit 130 (S116). In the example illustrated in FIG. 1, the representative object 38 of the transition destination image 34 is a representative image indicating one of the photos included in each album from the album A10 to the album A15. The representative object 38 is automatically determined from the album, for example, when a date of photography, a number of views by the user, whether a person is included, and an expression of a person who is included are set as conditions. The representative object 38 may be, for example, an image showing a photo designated in advance in the album by the user.

In the example illustrated in FIG. 1, the transition display image 32 including the objects 36 of the album A15 is displayed finally in the lowermost portion of the display area 30 through the transition manipulation. Therefore, the representative object 38 of the album A15 and the representative objects 38 of the album A10 to the album A14 located before the album A15 in a display order are displayed in the transition destination image 34. The representative objects 38 may be text information regarding photos indicating albums and the representative objects 38 other than the above-described examples. As the representative objects 38, a plurality of photos may be displayed for one album. The representative objects 38 of the albums before and after the album finally displayed in the lowermost portion of the display area 30 through the transition manipulation may be displayed in the transition destination image 34. Thereafter, the image acquisition unit 144 outputs the acquired transition destination image 34 to the display control unit 146.

When the determination result of step S108 indicates that the transition manipulation amount is less than threshold value (Xₜₕ), the image acquisition unit 144 does not acquire the transition destination image 34. At this time, the display control unit 146 performs only the transition of the transition display image 32 through the transition manipulation without displaying the transition destination image 34 in the display area 30 (S104).

When the transition destination image 34 is acquired in step S116, the display control unit 146 displays the transition destination image 34 acquired by the image acquisition unit 144 in the display area 30 of the display unit 110 (SI24).

Thus, in this display example, the transition destination image 34 is displayed in the display area 30 when the transition display image 32 transitions through the transition manipulation. In this way, the user can recognize, before the transition ends, whether a target photo will be present after the transition from the details of the transition destination image 34 and can further determine whether or not to transition the transition display image 32 to easily find the target photo. In this display example, the representative objects 38 of the album finally displayed in the lowermost portion of the display area 30 through the transition manipulation and the representative objects 38 of the previously displayed albums are displayed as the transition destination image 34. In this way, for example, when the transition display image 32 transitions at a high speed, the user can recognize the transition display image 32 displayed during the transition based on the representative objects 38 and easily find the target photo.

Since the transition amount is changed according to the transition manipulation amount, the transition display image 32 displayed in the display area 30 is changed according to the transition manipulation amount. Thus, the representative objects 38 displayed in the transition destination image 34 may be changed according to the manipulation amount. Referring to FIG. 5, for example, when the transition manipulation amount is small, the transition display image 32 of the album A15 is displayed finally at the lower end of the display area 30 after the transition. Therefore, the representative objects 38 of the albums A10 to A15 are displayed as the transition destination image 34. Conversely, when the transition manipulation amount is large, the transition display image 32 of the album A20 is displayed finally at the lower end of the display area 30 after the transition. Therefore, the representative objects 38 of the albums A15 to A20 are displayed as the transition destination image 34.

In the example illustrated in FIG. 5, the transition destination image 34 is displayed near the right side of the display unit 110 on which the scroll bar 40 is displayed, but an embodiment of the present disclosure is not limited to this example. For example, the display position of the transition destination image 34 may be displayed at any position such as the left side, the upper side, and the lower side of the display unit 110. At this time, the transition destination image 34 is displayed at, for example, a position in the display unit 110 that the manipulator 200 is unlikely to touch, and thus this position can be changed appropriately according to the size of the detection unit 120 or the kind of manipulator 200. When the manipulator 200 is, for example, a finger, there are considered to be areas on the display unit 110 that are difficult for the user to view due to the position or the direction of the manipulator 200. Accordingly, the position of the transition destination image 34 may be changed according to the position or the direction of the manipulator 200.

In the example illustrated in FIG. 5, when the transition destination image 34 is displayed, the scroll bar 40 is not displayed, but an embodiment of the present disclosure is not limited to this example. For example, the transition destination image 34 may be displayed away from the display area of the scroll bar 40 so that the scroll bar 40 is displayed.

Thereafter, the display control unit 146 determines whether a selection manipulation is performed on the transition destination image 34 with the manipulator 200 (S132). The detection unit 120 detects, for example, a touch manipulation on the detection unit 120 which is a touch panel of the manipulator 200 such as a finger. At this time, the detection unit 120 detects, for example, a touch manipulation of the manipulator 200 as a selection manipulation.

When the determination result of step S132 indicates that the selection manipulation is performed, the display control unit 146 does not display the transition destination image 34 (S140). Next, the display control unit 146 displays the transition display image 32 corresponding to the selected transition destination image 34 in the display area 30 (S148).

For example, as illustrated on the left side of FIG. 6, the transition destination image 34 is assumed to be displayed on the display unit 110 through the process of step S124. At this time, the user is assumed to perform a selection manipulation on the representative object 38 which is the representative image of the album A15 with the manipulator 200. Upon receiving the detection result of the detection unit 120, the display control unit 146 does not display the transition destination image 34. Then, the display control unit 146 transitions the transition display image 32 until the transition display image 32 included in the selected album A15 at the lower end of the display area 30 is displayed at the lowermost end of the display area 30. At this time, the display control unit 146 may cause a transition speed of the transition display image 32 to be faster than a normal speed or may display the transition display image 32 after the transition in the display area 30 directly from the transition display image 32 in transition.

Thus, in this display example, when the selection manipulation is performed on the transition destination image 34, the transition display image 32 corresponding to the selected representative object 38 is displayed in the display area 30. In this way, for example, when the target photo of the user is included in the transition destination image 34, the user can display the transition display image 32 including the target photo in the display area 30 even during the transition of the transition display image 32, and thus it is possible to shorten the time that the user spends finding the target photo.

Conversely, when the determination result of step S132 indicates that the selection manipulation is not performed, the display control unit 146 determines whether the transition speed of the transition display image 32 is less than a threshold value (Vₜₕ) (S164). The threshold value (Vₜₕ) is set in advance to be, for example, a speed at which the user can easily view the details of the transition display image 32 in transition.

When the determination result of step S164 indicates that the transition speed of the transition display image 32 is less than a threshold value (Vₜₕ), the display control unit 146 does not display the transition destination image 34 (S172).

Conversely, when the determination result of step S164 indicates that the transition speed of the transition display image 32 is equal to or greater than a threshold value (Vₜₕ), the process returns to step S164 and the determination of step S164 is repeated until the transition speed becomes less than a threshold value (Vₜₕ). Meanwhile, the transition destination image 34 is displayed in the display area 30 and the transition display image 32 is also continuously transitioned.

The process of displaying the transition destination image 34 in FIG. 4 is started, for example, when the detection unit 120 becomes valid. For example, when the detection unit 120 becomes invalid or another prioritized process is performed, the process of FIG. 4 ends.

In step S124, termination notification of the transition display image 32 by the transition destination image 34 may be performed as in the display example of FIG. 7. In the example illustrated in FIG. 7, when the representative object 38 of the album A30 corresponding to the end portion of the transition display image 32 is displayed as the transition destination image 34 through the transition manipulation, the end portion of the transition destination image 34 can be brightened by the display control unit 146. In this way, by showing the end portion of the transition display image 32 in the transition destination image 34, the user can be notified that the end of the transition display image 32 is displayed through the transition manipulation. In addition to the display example of FIG. 7, the termination notification of the transition display image 32 may be performed by modifying the display form of the representative object 38 corresponding to the end portion, performing the notification by audio or the like via an audio output device or the like, and modifying the display form of the transition destination image 34.

The first display example of the information processing apparatus 100 according to the embodiment has been described above. In a display method of the related art, when a transition manipulation amount is large, the transition speed is a high speed. Therefore, it is difficult for the user to view the transition display image 32, and thus display may go past target content in some cases. Conversely, when the transition manipulation amount is small, the transition speed is a low speed. Therefore, it takes too much time to find the target photo in some cases. In either case, in the display method of the related art, when there are many stored photos, the user may not easily find the target photo. The transition display image 32 displayed during the transition is stored in a cache memory of a CPU or the like. At this time, when a transition amount is large, the transition display image 32 of a distant transition destination may be stored in the cache memory too late, the transition display image 32 may not be displayed, and thus it is not easy to find the target photo.

On the other hand, in the first display example in the information processing apparatus 100 according to the embodiment, the transition destination image 34 is displayed after the transition manipulation. Thus, the user can recognize, before the transition ends, whether the target photo will be present after the transition from the details of the transition destination image 34 and can further determine whether or not to transition the transition display image 32 to easily find the target photo. Further, the user can recognize the transition display image 32 displayed during the transition based on the representative object 38, and thus can easily find the target photo.

In this display example, by selecting the representative object 38 of the transition destination image 34, the display control unit 146 transitions the transition display image 32 at a high speed. Thus, the user can display the transition display image 32 including the target photo in the display area 30 even during the transition of the transition display image 32, and thus it is possible to shorten the time the user spends finding the target photo.

### [1-4. Second display example (display in which form of transition destination image is changed)]

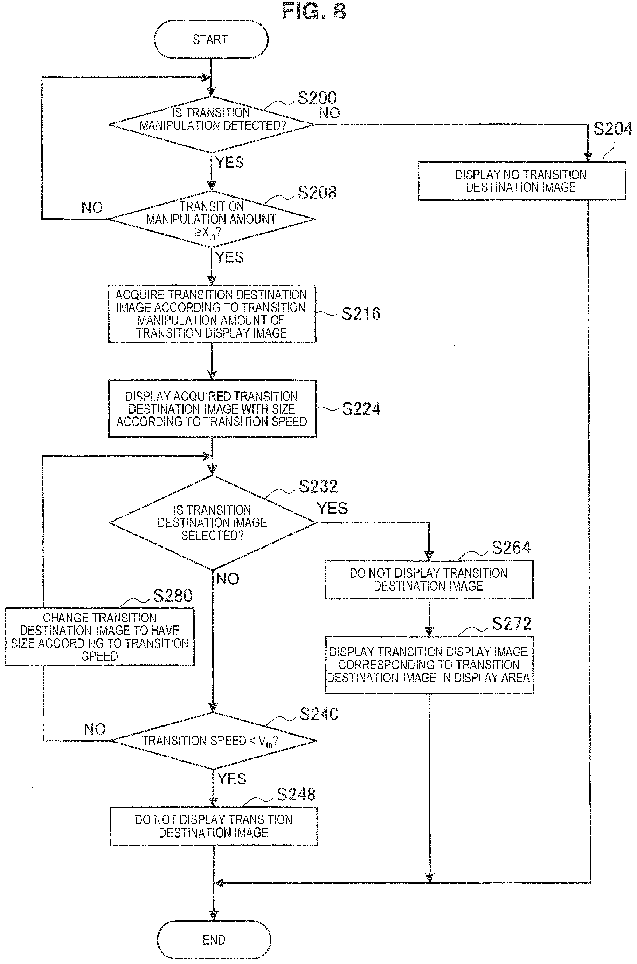

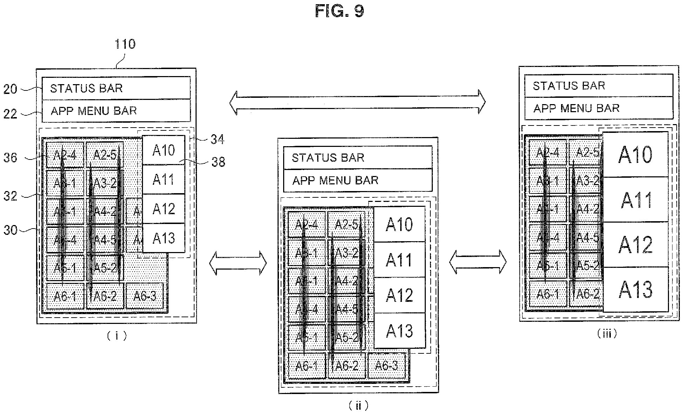

A second display example in the information processing apparatus 100 according to the embodiment will be described with reference to FIGS. 2 and 8 to 10. In this display example, display in which display forms of the transition display image 32 and the transition destination image 34 are changed is performed based on a transition manipulation amount, a transition speed of the transition display image 32, or the like. FIG. 8 is a flowchart illustrating the second display example in the information processing apparatus according to the embodiment. FIG. 9 is an explanatory diagram illustrating the display example. In the description of FIG. 8, the detailed description of the same processes as those of FIG. 4 will be omitted.

The flow of a process of this display example will be described with reference to FIG. 8. First, the detection unit 120 determines whether a transition manipulation is detected with the manipulator 200 (S200).

When the determination result of step S200 indicates that no transition manipulation is detected, the image acquisition unit 144 does not acquire the transition destination image 34. Accordingly, the transition destination image 34 is not displayed in the display area 30 (S204) and the process of FIG. 8 ends.

Conversely, when the determination result of step S200 indicates that the transition manipulation is detected, the detection unit 120 outputs the detected information to the manipulation amount calculation unit 142 and the display control unit 146. Thereafter, the manipulation amount calculation unit 142 calculates a transition manipulation amount from the information regarding the transition manipulation detected by the detection unit 120 and determines whether the transition manipulation amount is equal to or greater than the threshold value (Xₜₕ) (S208).

When the determination result of step S208 indicates that the transition manipulation amount is equal to or greater than the threshold value (Xₜₕ), the image acquisition unit 144 acquires the transition destination image 34 according to the transition manipulation amount from the storage unit 130 (S216).

When the determination result of step S208 indicates that the transition manipulation amount is less than threshold value (Xₜₕ), the image acquisition unit 144 does not acquire the transition destination image 34. At this time, the display control unit 146 performs only the transition of the transition display image 32 through the transition manipulation without displaying the transition destination image 34 in the display area 30 (S204). The processes of steps S200, S208, S216, and S256 can be performed in the same way as the processes of steps S100, S108, S116, and S156 of FIG. 4.

When the transition destination image 34 is acquired in step S216, the display control unit 146 displays the transition destination image 34 acquired by the image acquisition unit 144 in the display area 30 so that the transition destination image 34 has a size according to the transition manipulation amount (S224).

Referring to FIG. 9, a display example of the transition destination image 34 of three patterns, a pattern (i) to a pattern (iii), is illustrated. In the display examples of the pattern (i) to the pattern (iii), the sizes of the transition destination image 34 and the representative objects 38 are different. The pattern (i) is displayed with the smallest size and the pattern (iii) is displayed with the largest size. The display size of the transition destination image 34 is changed according to the transition manipulation amount. For example, when the transition manipulation amount is a transition speed, the display control unit 146 displays the transition destination image 34 so that the transition destination image 34 is large as in the pattern (iii) due to the fact that, for example, when the transition speed is high, the transition display image 32 transitions at a high speed and the details thereof are considered to be difficult to view. Conversely, when the transition speed is low, the display control unit 146 displays the transition destination image 34 to that the transition destination image 34 is small as in the pattern (i).

In the example illustrated in FIG. 9, the four representative objects 38 of the albums A10 to A13 are displayed in the transition destination image 34, but an embodiment of the present disclosure is not limited thereto. For example, the display control unit 146 may change the number of representative objects 38 to be displayed according to the sizes of the transition destination image 34 and the representative objects 38. Here, by displaying more representative objects 38 in the transition destination image 34, the user is considered to be able to easily find the target content.

Thus, for example, when the sizes of the representative objects 38 are small as in the pattern (i) of FIG. 9, the display control unit 146 may display more representative objects 38 in a vertical line. At this time, for example, the display control unit 146 may display six representative objects 38 in the pattern (i) of FIG. 9 and may display five representative objects 38 in the pattern (ii). At this time, the display control unit 146 displays the representative objects 38 with the sizes illustrated in FIG. 9. Thus, the user can easily find the target content.

Thereafter, the display control unit 146 determines whether the selection manipulation is performed on the transition destination image 34 with the manipulator 200 (S232).

When the determination result of step S232 indicates that the transition destination image 34 is not selected, the display control unit 146 determines whether the transition speed of the transition display image 32 is less than a threshold value (Vₜₕ) (S240).

When the determination result of step S240 indicates that the transition speed is less than the threshold value (Vₜₕ), the display control unit 146 does not display the transition destination image 34 (S248).

Conversely, when the determination result of step S240 indicates that the transition speed is equal to or greater than a threshold value (Vₜₕ), the display control unit 146 changes the transition destination image 34 to have a size according to the transition speed of the transition display image 32 (S280). In step S280, the display control unit 146 may display the transition destination image 34 with a plurality of sizes according to threshold values of a plurality of transition speeds. For example, as illustrated in FIG. 9, the display control unit 146 may set the threshold values so that the transition destination image is changed in the order of the pattern (i), the pattern (ii), and the pattern (iii) as the transition speed is faster, and then may display the transition destination image 34.

Conversely, when the determination result of step S232 indicates that the transition destination image 34 is selected, the display control unit 146 does not display the transition destination image 34 (S264). Then, the display control unit 146 displays the transition display image 32 corresponding to the representative object of the selected transition destination image 34 in the display area 30 (S272).

The second display example of the information processing apparatus 100 according to the embodiment has been described above. In this display example, the display forms of the transition destination image 34 and the representative objects 38 are changed based on the transition manipulation amount, the transition speed of the transition display image 32, or the like.

Here, when the object 36 of the target photo is located at a position distant from the object 36 displayed in the display area 30, the transition manipulation is considered to be continuously performed. When the transition manipulation is continuously performed, there is a probability of the selection manipulation on the transition destination image 34 or a manipulation of transitioning the transition destination image 34, as will be described below, being erroneously performed. In this display example, for the transition manipulation, the size of the transition destination image 34 may be changed according to an elapsed time after the transition manipulation in addition to the transition manipulation amount and the transition speed. For example, when the transition manipulation amount is large in FIG. 9, the display control unit 146 may display the pattern (i) immediately after the transition manipulation and may display the pattern (iii) after a given time has elapsed. The display control unit 146 may continuously display, for example, the pattern (i), the pattern (ii), and the pattern (iii) in this order within a given time immediately after the transition manipulation. Thus, by displaying the transition destination image 34 immediately after the transition manipulation to be small, it is possible to prevent an erroneous manipulation from occurring due to the manipulation performed continuously immediately after the transition manipulation. Even when the transition display of the transition display image 32 ends, for example, the transition speed may likewise be determined to be equal to or less than the threshold value, and then the pattern (iii), the pattern (ii), and the pattern (i) may be continuously displayed in this order within a given time.

When the user changes the size of the transition destination image 34 through such display control, operability of the information processing apparatus 100 can be improved. That is, when the transition manipulation amount is small, the user is considered to have a purpose of finding content while confirming the transitioning transition display image 32. Conversely, when the transition manipulation amount is large, the user is considered to have a purpose of transitioning the transition display image 32 at a high speed rather than confirming the transitioning transition display image 32. Therefore, in this display example, for example, when the transition manipulation amount is small, the visibility of the transition display image 32 to be transitioned and displayed can be improved by displaying the transition destination image 34 to be small and enlarging the area of the transition display image 32 displayed in the display area 30. Conversely, in this display example, for example, when the transition manipulation amount is large, the transition speed of the transition display image 32 becomes fast, and thus the visibility deteriorates. Therefore, by displaying the transition destination image 34 displayed in the display area 30 to be large, it is possible to improve the visibility of the transition destination image 34. Thus, the user can easily find the target photo.

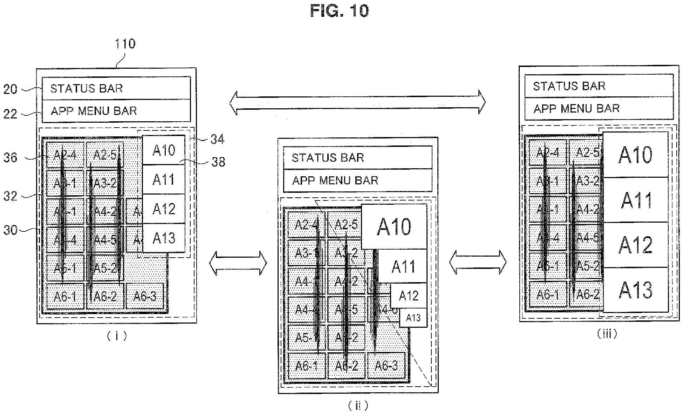

A modification example of the second display example will be described with reference to FIG. 10. FIG. 10 is an explanatory diagram illustrating a modification example of the second display example.

In the example illustrated in FIG. 10, as in FIG. 9, the sizes and the shapes of the transition destination image 34 and the representative objects 38 are changed, for example, according to the transition manipulation amount, the transition speed of the transition display image 32, or the like. For example, as the transition manipulation amount and the transition speed increase, the size or the shape of the transition destination image 34 may be changed in the order of a pattern (i), a pattern (ii), and a pattern (iii). For the size or the shape of the transition destination image 34 of the pattern (ii) of FIG. 10 unlike FIG. 9, the representative object 38 of the album A10 is displayed to be the largest and the representative object 38 of the album A13 is displayed to be the smallest among the representative objects 38 of the albums A10 to A13 displayed in the transition destination image 34. Since the representative objects 38 are displayed so that the sizes thereof gradually decrease from the album A10 to the album A13, the transition destination image 34 displayed in the display area 30 has substantially an inverted triangle shape.

In the modification example illustrated in FIG. 10, the transition destination image 34 displayed in the display area 30 has a substantially triangular shape and the sizes of the representative objects 38 are changed according to the shape of the displayed transition destination image 34. Thus, for example, the high visibility of both of the images can be compatible even when the transition speed is an intermediate speed and the user desires to view both of the transition destination image 34 and the transitioning and displayed transition display image 32.

In the example illustrated in FIG. 10, the display form of the transition destination image 34 is changed according to the transition manipulation amount and the transition speed, but an embodiment of the present disclosure is not limited to this example. For example, as in the first display example described in FIG. 9, the display form of the transition destination image 34 may be changed according to an elapsed time after the transition manipulation. For example, in FIG. 10, when the transition manipulation amount is large, the display control unit 146 may display the pattern (i) immediately after the transition manipulation and may display the pattern (iii) after a given time has elapsed. For example, the display control unit 146 may continuously display the pattern (i), the pattern (ii), and the pattern (iii) in this order within a given time immediately after the transition manipulation. Even when the transition display of the transition display image 32 ends, for example, the transition speed may likewise be determined to be equal to or less than the threshold value, and then the pattern (iii), the pattern (ii), and the pattern (i) may be continuously displayed in this order within a given time.

In the example illustrated in FIG. 10, the shape of the transition destination image 34 is an inverted triangle shape and the sizes of the representative objects 38 are changed in accordance with the inverted triangle shape, but an embodiment of the present disclosure is not limited thereto. For example, the shape of the direction of the substantially inverted triangle may be changed freely, for example, so that the lower side thereof is large. For example, the shapes or the display positions of the transition destination image 34 and the representative objects 38 may be changed according to an area in which a manipulation of the manipulator 200 is detected so that the transition destination image 34 is not displayed in the detected area.

The transition manipulation of displaying the transition destination image 34 in FIG. 10 has been performed on the display area 30 or the transition display image 32, but an embodiment of the present disclosure is not limited thereto. For example, when the user holds the information processing apparatus 100 with one of his or her hands and manipulates the detection unit 120 with his or her fingers of the hand holding the terminal, manipulation the lower side of the display unit 110 which is the detection unit 120 is considered to be natural. Therefore, when the transition manipulation amount is detected based on the number of manipulations, for example, the display control unit 146 may display the transition destination image 34 in the display unit 110 based on the transition manipulation of the manipulator 200 on an area on the lower side.

### [1-5. Third display example (display in which granularity is changed)]

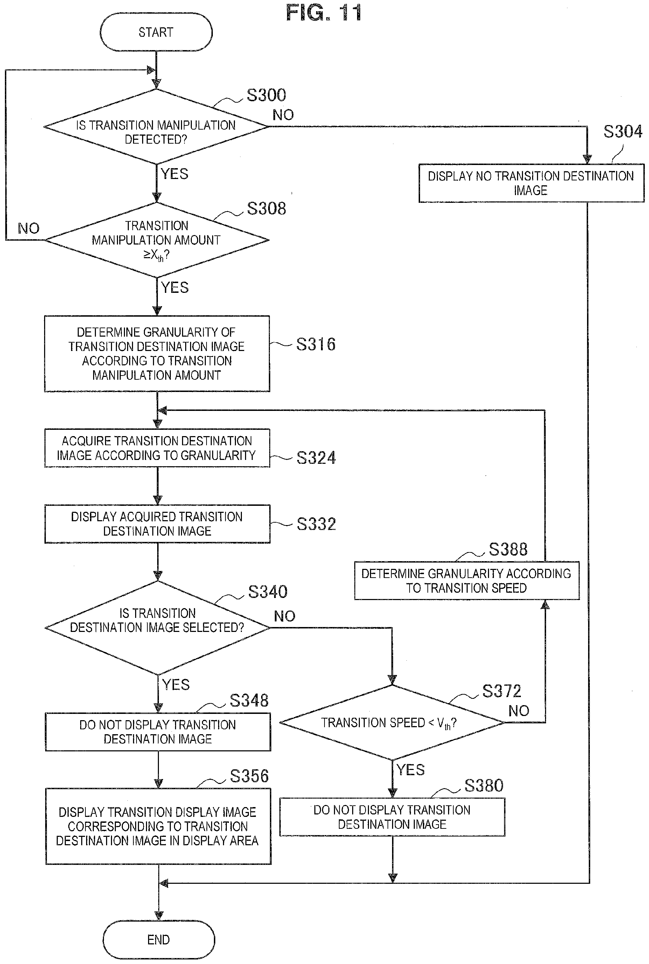

Next, a third display example in the information processing apparatus 100 according to the first embodiment of the present disclosure will be described with reference to FIGS. 1, 2, and 11. FIG. 11 is a flowchart illustrating the third display example in the information processing apparatus 100 according to the embodiment. In this display example, granularity is changed according to a transition manipulation amount and the transition destination image 34 is displayed according to the granularity. In the description of FIG. 11, the detailed description of the same processes as those of FIG. 4 will be omitted.

The granularity in the embodiment refers to, for example, a unit in which a plurality of pieces of content such as photos are divided into a plurality of groups based on information regarding a day of photography. When the content is photos, the granularity is, for example, a year, month, and date, or a time of photography, the size of a photo, an information amount of a photo, a part of a file name, a unit in which classification is performed with a given number, or a unit in which the user performs any classification. The granularity becomes coarse when the unit in which the content is collected is larger. The granularity becomes fine when the unit in which the content is collected is smaller. For example, the granularity becomes coarse in order when the units in which an album is collected are units of hours, units of days, units of weeks, units of months, and units of years.

The flow of a process of this display example will be described with reference to FIG. 11. First, the detection unit 120 determines whether a transition manipulation is detected with the manipulator 200 (S300).

When the determination result of step S300 indicates that no transition manipulation is detected, the image acquisition unit 144 does not acquire the transition destination image 34. Accordingly, the transition destination image 34 is not displayed in the display area 30 (S304) and the process of FIG. 11 ends.

Conversely, when the determination result of step S300 indicates that the transition manipulation is detected, the detection unit 120 outputs the detected information to the manipulation amount calculation unit 142 and the display control unit 146. Thereafter, the manipulation amount calculation unit 142 calculates a transition manipulation amount from the transition manipulation detected by the detection unit 120 and determines whether the transition manipulation amount is equal to or greater than the threshold value (Xₜₕ) (S308).

When the determination result of step S308 indicates that the transition manipulation amount is less than threshold value (Xₜₕ), the image acquisition unit 144 does not acquire the transition destination image 34. Further, the display control unit 146 performs only the transition of the transition display image 32 through the transition manipulation without displaying the transition destination image 34 in the display area 30 (S304). The processes of steps S300 and S308 can be performed in the same way as the processes of steps S100 and S108 of FIG. 4.

Conversely, when the determination result of step S308 indicates that the transition manipulation amount is equal to or greater than the threshold value (Xth), the image acquisition unit 144 determines the granularity of the transition destination image 34 according to the transition manipulation amount (S316). In this display example, for example, when the transition manipulation amount is large, the granularity becomes coarse. When the transition manipulation amount is small, the granularity becomes fine. For example, when the transition manipulation amount is large, the coarse granularity of units of months may be set. When the transition manipulation amount is small, the fine granularity of units of days may be set.

After step S316, the image acquisition unit 144 acquires the transition destination image 34 according to the determined granularity from the storage unit 130 (S324). For example, when the transition manipulation amount is large, the transition destination image 34 is acquired from the storage unit 130 using the coarse granularity as a criterion. When the transition manipulation amount is small, the transition destination image 34 is acquired from the storage unit 130 using the fine granularity as a criterion. For example, when the content is photos, the granularity is assumed to be set based on a date of photography. At this time, when the transition manipulation amount is large, the image acquisition unit 144 may acquire the representative objects 38 at the time of classification of the photos in the month unit. When the transition manipulation amount is small, the image acquisition unit 144 may acquire the representative objects 38 at the time of the classification of the photos in units of days.

Thereafter, the display control unit 146 determines whether the selection manipulation is performed on the transition destination image 34 with the manipulator 200 (S340).

When the determination result of step S340 indicates that the transition destination image 34 is selected, the display control unit 146 does not display the transition destination image 34 (S348). Then, the display control unit 146 displays the transition display image 32 corresponding to the representative object 38 of the selected transition destination image 34 in the display area 30 (S356).

Conversely, when the determination result of step S340 indicates that the selection manipulation is not performed, the display control unit 146 determines whether the transition speed of the transition display image 32 is less than the threshold value (Vₜₕ) (S372).

When the determination result of step S372 indicates that the transition speed is less than the threshold value (Vₜₕ), the display control unit 146 does not display the transition destination image 34 (S380).

Conversely, when the determination result of step S372 indicates that the transition speed is equal to or greater than the threshold value (Vₜₕ), the image acquisition unit 144 determines the granularity of the transition destination image 34 according to the transition speed (S388). In this display example, for example, when the transition speed is high, the granularity becomes coarse. When the transition speed is low, the granularity becomes fine. For example, when the transition speed is high, the coarse granularity of units of months is set. When the transition speed is low, the fine granularity of units of days is set. After step S388, the processes from step S324 are repeatedly performed. Meanwhile, the transition destination image 34 is displayed in the display area 30 and the transition display image 32 is also continuously transitioned. The processes of steps S340, S348, S356, S372, and S380 can be performed in the same way as the processes of steps S132, S140, S148, S164, and S172 of FIG. 4.

Although not illustrated, when the determination result of step S372 indicates that the transition speed is equal to or greater than a threshold value (Vₜₕ), the process may return to step S372 without the process of step S388 being performed, and the determination of step S372 may be repeated until the transition speed becomes less than a threshold value.

In the example illustrated in FIG. 1, the representative objects 38 are displayed as the transition destination image 34, but an embodiment of the present disclosure is not limited to this example. For example, information indicating the granularity coarser than that of the representative objects 38 may be further displayed in addition to the representative objects 38 as the transition destination image 34. For example, in the information processing apparatus 100 illustrated on the right side of FIG. 1, the photographed albums collected in units of months are shown as the representative objects 38 and the albums A10 to A15 are assumed to indicate each month of November 2012 to April 2013. At this time, the display control unit 146 may display, for example, a partition line or text indicating a year as information indicating the year unit coarser than the month unit which is the granularity of the representative objects 38 between the album A11 indicating December 2012 and the album A12 indicating January 2013. When the albums are shown in units of weeks, the display control unit 146 may display a partition line or text indicating a month or a year at a position at which a photographed month or a year changes between the displayed representative objects 38.

The third display example of the information processing apparatus 100 according to the embodiment has been described. Here, for example, when the granularity is units of days, displaying the objects in the granularity of another unit such as hours, months, or years can be considered depending on the number of still images in the album or the number of albums, so that it is easier to find the target photo. For example, when the object 36 of the target photo is located several months away from the displayed object 36, the granularity of the transition destination image 34 is set to units of weeks or months rather than days, so that it is easier to find the target photo in some cases. Accordingly, in this display example, the granularity of the transition destination image 34 is changed according to the manipulation amount. In this way, the user can change the transition destination image 34 with the granularity desired by the user, and thus can easily find the target content. 1-6. Fourth display example (display in which transition destination image is transitioned)

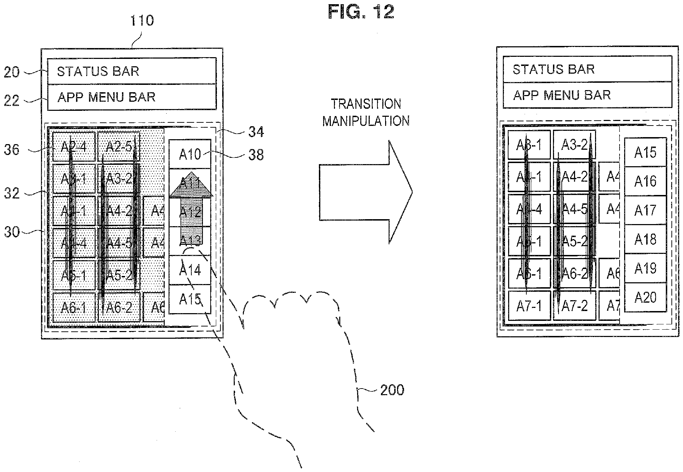

Next, a fourth display example in the information processing apparatus 100 according to the embodiment will be described with reference to FIGS. 1 and 12. FIG. 12 is an explanatory diagram illustrating the fourth display example in the information processing apparatus 100 according to the embodiment. In this display example, the transition destination image 34 is transitioned and displayed based on a transition manipulation on the transition destination image 34.

The left drawing of FIG. 12 shows, for example, the state of the information processing apparatus 100 after the transition manipulation in FIG. 1 and is an example in which the transition destination image 34 is displayed through the transition manipulation. The right drawing of FIG. 12 is an example in which the transition destination image 34 transitions after the transition manipulation on the transition destination image 34.

In the example illustrated in FIG. 12, when the transition manipulation is performed on the transition destination image 34 with the manipulator 200, the display control unit 146 transitions the transition destination image 34, and thus the displayed representative objects 38 of the albums A10 to A15 are assumed to transition to the representative objects 38 of the albums A15 to A20.

In this display example, the transition destination image 34 can be transitioned in units of albums indicated by the transition destination image 34 through the transition manipulation on the transition destination image 34. Therefore, faster transition can be realized rather than the transition of the transition display image 32 in units of the objects 36 indicated by the transition display image 32. For example, when the target photo is present in an area located away from the area of the displayed transition display image 32, it is possible to shorten a transition time up to the target content. Since the transition speed of the transition destination image 34 is relatively slower than the transition speed of the transition display image 32, the user can easily view the content displayed during the transition, and thus can easily find the target content.

The fourth display example of the information processing apparatus 100 according to the embodiment has been described above. This display example is not limited thereto. For example, the transition amount and the transition speed of the transition destination image 34 may be based on the transition manipulation amount. For example, as in the second display example and the third display example of the embodiment, the display form or the granularity of the transition destination image 34 may be changed based on the transition manipulation amount.

The information processing apparatus 100 according to the first embodiment of the present disclosure has been described above. In this embodiment, the transition destination image 34 is displayed in the display area 30 based on the transition manipulation of the manipulator 200 on the transition display image 32 displayed on the display unit 110. Thus, the user can recognize, before the transition ends, whether the target photo will be present after the end of the transition from the details of the transition destination image 34 and can further determine whether or not to transition the transition display image 32 to easily find the target photo. For example, when the transition display image 32 transitions at a high speed, the user can recognize the transition display image 32 displayed during the transition based on the representative objects 38 and easily find the target photo.

Thus, in this display example, when the selection manipulation is performed on the transition destination image 34, the transition display image 32 corresponding to the selected representative object 38 is displayed in the display area 30. In this way, for example, when the target photo of the user is included in the transition destination image 34, the user can display the transition display image 32 including the target photo in the display area 30 even during the transition of the transition display image 32, and thus it is possible to shorten the time that the user spends finding the target photo.

### <2. Second embodiment (display content: map)>

### [2-1. First display example (basic display method)]

Next, a display form of an information processing apparatus 100 according to the second embodiment of the present disclosure will be described. The information processing apparatus 100 according to the embodiment can also display, as content, a map or the like in which a display area can be changed through transition. A process of the embodiment can be applied to, for example, a map application presenting a map.

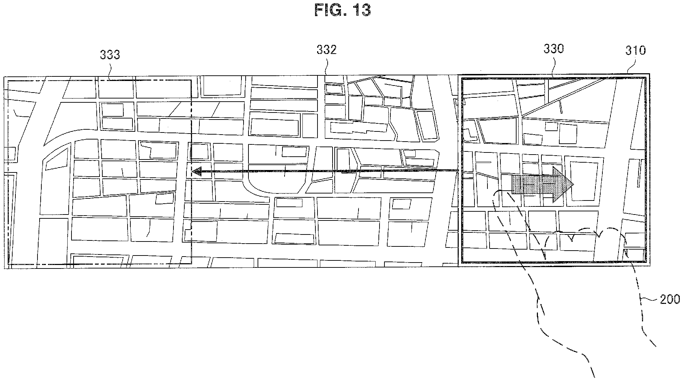

First, transition of a transition display image 332 in the information processing apparatus 100 according to the second embodiment of the present disclosure will be described with reference to FIGS. 2 and 13. FIG. 13 is an explanatory diagram illustrating the transition of the transition display image 332 in the information processing apparatus 100 according to the second embodiment of the present disclosure. The configuration of the information processing apparatus 100 according to the embodiment is the same as the configuration of that of the first embodiment illustrated in FIG. 2. In the embodiment, the transition display image 332 will be described as a map.

Referring to FIG. 13, a display unit 310 of the information processing apparatus 100 displays a part of a map which is a transition display image 332 in a display area 330 in which information can be displayed. At this time, the information processing apparatus 100 according to the embodiment can display a desired area by transitioning the transition display image 332 based on, for example, a transition manipulation with a manipulator 200, such as a flicking manipulation of touching the display unit 310 with a finger and moving the finger. Thus, the user can view the transition display image 332, for example, even when the transition display image 332 is large and the entire transition display image 332 is thus not displayable in the display area 330. The detection unit 120 detects, for example, a flicking manipulation of the manipulator 200 as a transition manipulation. In the example illustrated in FIG. 13, the transition display image 332 transitions through the transition manipulation with the manipulator 200, so that the display area 330 after the transition is finally displayed in the display area 333.

A transition speed and a transition amount in which the transition display image 332 transitions are changed according to a transition manipulation amount of the transition manipulation. For example, when the transition manipulation amount is large, the transition speed and the transition amount increase. When the transition manipulation amount is small, the transition speed and the transition amount decrease. The transition manipulation amount is, for example, a value based on a manipulation speed or the like of the manipulator 200 calculated by the manipulation amount calculation unit 142.

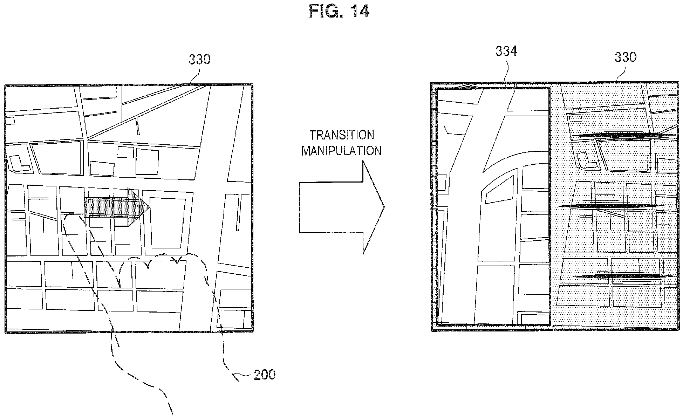

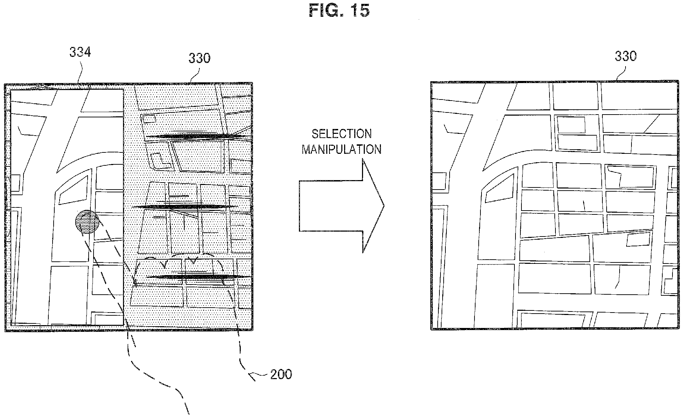

Next, a first display example in the information processing apparatus 100 according to the embodiment will be described with reference to FIGS. 14 and 15. FIG. 14 is an explanatory diagram illustrating the first display example of the transition destination image 334 in the information processing apparatus 100 according to the embodiment. FIG. 15 is an explanatory diagram illustrating one display example of the transition display image 332 when a selection manipulation is performed on the transition destination image 334 after the display of the transition destination image 334 illustrated in FIG. 14.

As illustrated on the left side of FIG. 14, a right-side area in the map which is the transition display image 332 illustrated in FIG. 13 is assumed to be displayed on the display unit 310. When a user performs a flicking manipulation of moving the manipulator 200 from the left to the right as the transition manipulation in this state, the transition display image 332 displayed in the display area 330 transitions to the left side through inertial scrolling or the like based on the transition manipulation. At this time, as illustrated on the right side of FIG. 14, the transition destination image 334 is displayed on the left side of the display area 330.

The transition destination image 334 is an image that indicates the transition display image 332 finally displayed in the display area 330 after the transition. In the example illustrated on the right side of FIG. 14, the transition destination image 334 is an image that indicates a part of the transition display image 332 finally displayed after the transition and is specifically a part of the left-side area of the transition display image 332 illustrated in FIG. 13. The transition destination image 334 may be, for example, an image in which a part of the transition display image 332 finally displayed after the transition is expanded or an image of a map of which a scale is changed centering on the transition display image 332 finally displayed after the transition. The representative image may also be an image of text information such as geographical names, latitude, and longitude, a symbol such as a map symbol, or the like.

Thus, the display control unit 146 displays the transition destination image 334 corresponding to the transition display image 332 after the transition in the display area 330 according to the transition manipulation by the user. In this way, the user can recognize, before the transition ends, whether a target place will be present after the transition from the details of the transition destination image 334, can further determine whether or not to transition the transition display image 332, and thus can easily find the target place.

After the transition destination image 334 is displayed on the display unit 310, as illustrated in FIG. 15, the display control unit 146 may display the transition display image 332 to a transition destination corresponding to the transition destination image 334 in the display area 330 based on the selection manipulation of the manipulator 200 on the transition destination image 334. The selection manipulation can be performed through, for example, a tap manipulation of bringing the manipulator 200 into contact with a position at which the transition destination image 334 is displayed and then separating the manipulator 200. When the selection manipulation on the transition destination image 334 is detected, the display control unit 146 displays the transition display image 332 after the transition in the display area 330. At this time, the display control unit 146 may transition the transition display image 332 at a high speed from a current display position to a display position after the transition and display the transition display image 332 after the transition in the display area 330. Alternatively, the display control unit 146 may immediately display the transition display image 332 after the transition in display of the display area 330 after the selection manipulation. Thus, the user can display the transition display image 332 including the target place in the display area 330 even during the transition of the transition display image 332, and thus it is possible to shorten a time that the user spends finding the target place. In the transition display image 332 displayed after the transition manipulation through the selection manipulation, for example, the area of the transition destination image 334 in which the selection manipulation is performed is the center of the transition display image 332 displayed after the transition.

The first display example of the information processing apparatus 100 according to the embodiment has been described above. In this display example, the display control unit 146 displays the transition destination image 334 after the transition manipulation. Thus, the user can recognize, before the transition ends, whether the target place will be present after the transition from the details of the transition destination image 334 and can further determine whether or not to transition the transition display image 332 to easily find the target place. In this display example, when the transition destination image 334 is selected, the display control unit 146 transitions the transition display image 332 at a high speed. Thus, the user can display the transition display image 332 including the target place in the display area 330 even during the transition of the transition display image 332, and thus it is possible to shorten the time that the user spends finding the target place.

In the example illustrated in FIG. 14, the transition destination image 334 is displayed on the left side of the display area 330, but an embodiment of the present disclosure is not limited to this example. For example, the display position of the transition destination image 334 may be changed based on a direction of the transition manipulation or the touch position of the manipulator 200. In the example illustrated in FIG. 14, when a transition amount is large for the transition of the transition display image 332 to the right, the user is considered to be interested in the left side which is the transition destination. Therefore, by displaying the transition destination image 334 to the left side of the display area 330, the user can view the transition destination image 334 without a sense of discomfort. Conversely, when the transition amount is small, there is a probability of the user confirming the transition display image 332 during the transition. Therefore, the user is considered to be interested in the center or the right side. In this case, by displaying the transition destination image 334 to the right side of the display area 330, the user can view the transition destination image 334 without the sense of discomfort. When the display unit 110 of the information processing apparatus 100 such as a tablet terminal has a large size, a viewable area is large. Therefore, the transition destination image 334 may be displayed at any position of the display area 330.

In the example illustrated in FIG. 15, the display control unit 146 performs the display control such that the area in which the selection manipulation is performed in the transition destination image 334 is the center of the transition display image 332 displayed in the display area 330 after the transition, but an embodiment of the present disclosure is not limited to this example. For example, the display control unit 146 may perform the display control such that a specific position such as the center of the transition destination image 334 is the center of the transition display image 332 displayed in the display area 330 after the transition.

### [2-2. Second display example (display in which form of transition destination image is changed)]

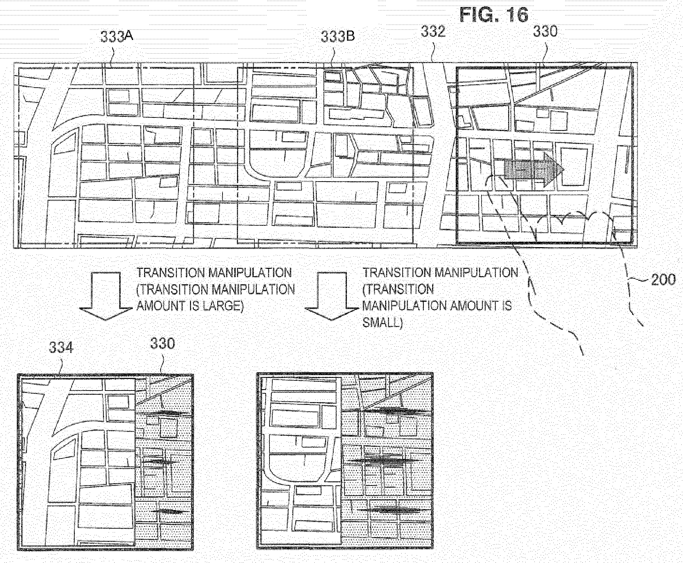

Next, a second display example in the information processing apparatus 100 according to the embodiment will be described with reference to FIG. 16. FIG. 16 is an explanatory diagram illustrating the second display example in the information processing apparatus 100 according to the embodiment. In this display example, a display form of the transition destination image 334 is changed to be displayed based on a transition manipulation amount.

That is, in this display example, for example, when the transition manipulation amount is large, the display control unit 146 displays the transition destination image 334 so that the size thereof is large. When the transition manipulation amount is small, the display control unit 146 displays the transition destination image 334 so that the size thereof is small. The transition manipulation amount is, for example, a manipulation speed of the manipulator 200 calculated by the manipulation amount calculation unit 142.

In the example illustrated in FIG. 16, when the transition manipulation amount is large, the display control unit 146 transitions the transition display image 332 displayed in the display area 330 up to a display area 333A after the transition. At this time, the display control unit 146 displays a part of the display area 333A after the transition as a transition destination image 334 so that the part of the display area 333A has a large size equal to or greater than half of the display area 330. Conversely, when the transition manipulation amount is small, the display control unit 146 transitions the transition display image 332 displayed in the display area 330 up to a display area 333B after the transition. At this time, the display control unit 146 displays a part of the display area 333B after the transition as the transition destination image 334 so that the part of the display area 333B has a small size less than half of the display area 330.

Here, when the transition manipulation amount is large, the user is considered to have a purpose of transitioning the transition display image 332 at a high speed rather than confirming the transitioning transition display image 332. Conversely, when the transition manipulation amount is small, the user is considered to have a purpose of finding a place while confirming the transitioning transition display image 332. Therefore, in this display example, for example, when the transition manipulation amount is large, the transition speed of the transition display image 332 is a high speed, and thus the visibility becomes worse. Therefore, the transition destination image 334 displayed in the display area 330 is enlarged and the display range of a map displayed as the transition destination image 334 is enlarged. Conversely, in this display example, for example, when the transition manipulation amount is small, the visibility of the transitioning transition display image 332 can be improved by displaying the transition destination image 334 so that the transition destination image 334 is small and enlarging the area in which the transition display image 332 displayed in the display area 330 is displayed. Thus, the user can easily find a target place.

The second display example of the information processing apparatus 100 according to the embodiment has been described above. In this display example, a display form of the transition destination image 334, such as the size of the transition destination image 334, is changed based on the transition manipulation amount, the transition speed of the transition display image 332, or the like. Thus, it is possible to suggest the transition destination image 334 suitable for the intention of the transition manipulation of the user.

In the example illustrated in FIG. 16, the size of the transition destination image 334 is changed based on the transition manipulation amount, but an embodiment of the present disclosure is not limited to this example. For example, the display control unit 146 may change the size of the transition destination image 334 according to the time elapsed after the transition manipulation or the transition speed of the transition display image 332. For example, when the transition manipulation amount is large, the display control unit 146 may display the transition destination image 334 immediately after the transition manipulation so that the transition destination image 334 is small and may display the transition destination image 334 so that the transition destination image 334 is large after a given time has elapsed.

### [2-3. Third display example (display in which granularity is changed)]

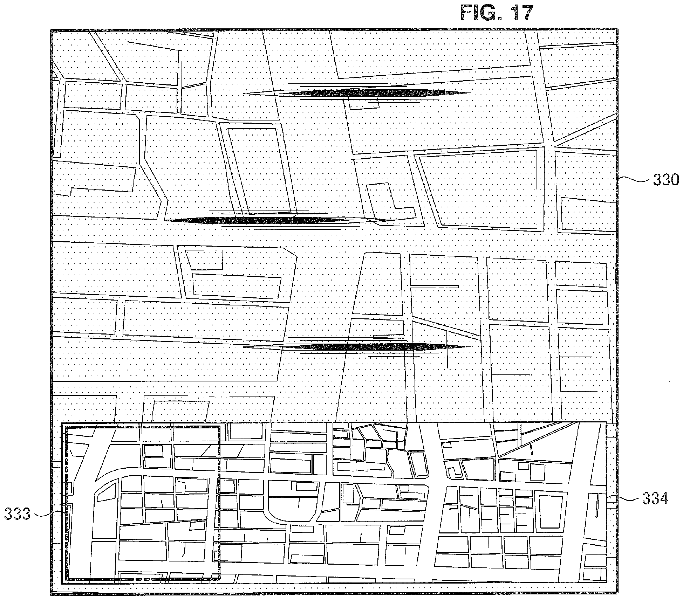

Next, a third display example in the information processing apparatus 100 according to the embodiment will be described with reference to FIG. 17. FIG. 17 is an explanatory diagram illustrating the third display example in the information processing apparatus 100 according to the embodiment. In this display example, the granularity of the transition destination image 334 is changed for display based on the transition manipulation amount.

In the embodiment, the granularity, which is a unit in which content is collected and shown, can be set to, for example, a scale of a map when the content is a map. For example, the granularity of a map with a small scale such as 1/48000 becomes coarse and the granularity of a map with a large scale such as 1/1500 becomes fine.

In this display example, the display control unit 146 changes the granularity of the transition destination image 334 according to the transition manipulation amount. For example, when the transition manipulation amount is large, the display control unit 146 displays coarse granularity as the granularity of the transition destination image 334.

Under the display control, a representative geographical name or landmark near a transition destination which is not displayed or is difficult to view at a large scale in the transition destination image 334 is displayed when the transition manipulation amount is large. Accordingly, the user can easily find the target place. Since information regarding a road, a railroad, or the like up to a transition destination is displayed over a broad range in the transition destination image 334 and it is easy to understand information regarding the vicinity of the target place, the user can easily find the target place.

To determine the granularity of the transition destination image 334, the display control unit 146 may determine whether the transition manipulation amount is equal to or greater than a threshold value based on the result calculated by the manipulation amount calculation unit 142. When the determination result indicates that the transition manipulation amount is equal to or greater than the threshold value, the display control unit 146 displays the transition destination image 334 with the granularity coarser than that of the transition display image 332 in the display area 330. For example, as illustrated in FIG. 17, the transition destination image 334 is displayed with the granularity coarser than that of the transition display image 332. Referring to FIG. 17, the display control unit 146 displays the transition destination image 334 with the granularity coarser than that of the transition display image 332, for example, on a lower side of the display area 330. At this time, the display control unit 146 may display an indication representing the display area 333 after the transition finally displayed in the display area 330 after the transition in the transition destination image 334. This indication may be performed by surrounding the display area 333 after the transition with a frame in the transition destination image 334 or displaying the display area 333 in another color.

When the determination result regarding whether the transition manipulation amount is equal to or greater than the threshold value indicates that the transition manipulation amount is less than the threshold value, the display control unit 146 displays the transition destination image 334 with the same granularity as the transition display image 332 in the display area 330. In this case, the display control unit 146 may display the transition destination image 334 with the granularity finer than that of the transition display image 332 in the display area 330.

The third display example of the information processing apparatus 100 according to the embodiment has been described above. In this display example, the display control unit 146 changes the granularity of the transition destination image 334 according to the transition manipulation amount. For example, when the transition manipulation amount is large, the transition destination image 334 is displayed with the coarse granularity. Thus, the user can easily find the target place.

### [2-4. Fourth display example (display in which transition destination image is transitioned)]

Next, a fourth display example in the information processing apparatus 100 according to the second embodiment of the present disclosure will be described. In this display example, the transition destination image 334 is transitioned and displayed based on the transition manipulation on the transition destination image 334.

For example, a transition manipulation is assumed to be performed on the transition display image 332 so that the transition destination image 334 is displayed. At this time, when it is detected that the transition manipulation is performed on the transition destination image 334, the display control unit 146 transitions the transition destination image 334. The transition manipulation is performed based on, for example, a flicking manipulation or a dragging manipulation of the manipulator 200 on the transition destination image 334. By transitioning the transition destination image 334, the user can easily view the map in the vicinity of the transition destination image 334. For example, the transition manipulation amount is large as in the third display example. Therefore, when the granularity of the transition destination image 334 is coarse, faster transition can be realized by transitioning the transition destination image 334 than by transitioning the transition display image 332.

When the transition destination image 334 transitions, the display control unit 146 may also display an area finally displayed after the transition of the transition destination image 334 in the transition display image 332. Since the display area 333 of the transition display image 332 after the transition is displayed in the transition destination image 334, the transition display image 332 can be transitioned at a higher speed by performing the transition manipulation on the display area 333 after the transition. Thus, when the fast transition is realized through the transition of the transition destination image 334, the user can view the display area 333 of the transition destination image 334 after the transition even during the fast transition of the transition destination image 334 by displaying the transition destination of the transition destination image 334 in the display area 330.

The fourth display example of the information processing apparatus 100 according to the embodiment has been described above. In this display example, the transition destination image 334 is transitioned and displayed based on the transition manipulation on the transition destination image 334. For example, when this display example is applied to the case in which the transition destination image 334 is displayed with the same granularity as the transition display image 332 as in the example illustrated in FIG. 14, the user can freely display the map in an area that he or she desires that is not displayed in the transition destination image 334, and thus can display a target place with high precision. For example, when this display example is applied to the case in which the transition destination image 334 is displayed with the granularity coarser than that of the transition display image 332 as in the example illustrated in FIG. 17, the transition destination image 334 is transitioned at a large scale. Therefore, the transition destination image 334 can transition at a speed higher than the transition speed of the transition display image 332. Therefore, the user can find the target place within a short time. Since the user can transition the map at any scale without performing an unnecessary manipulation such as changing of the scale of the map, the user can easily find the target place.

### [2-5. Fifth display example (display in which transition information is displayed)]

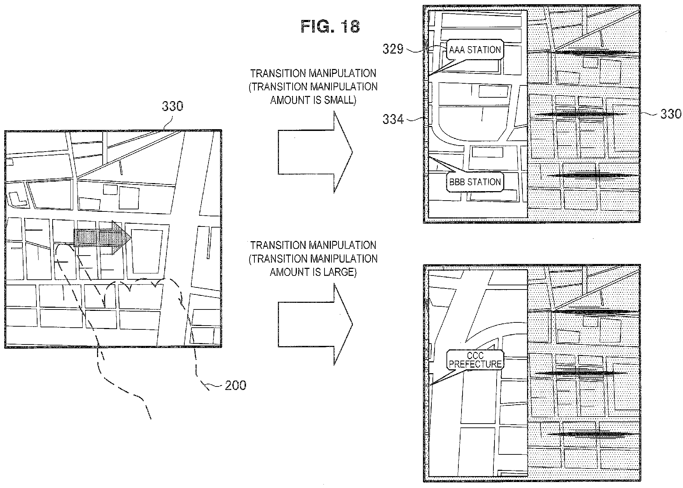

Next, a fifth display example in the information processing apparatus 100 according to the embodiment will be described with reference to FIG. 18. In this display example, the display control unit 146 displays transition information which is information regarding a transition destination of the transition destination image 334. FIG. 18 is an explanatory diagram illustrating the fifth display example in the information processing apparatus 100 according to the embodiment.

For example, a transition manipulation is assumed to be performed on the transition display image 332 so that the transition destination image 334 is displayed in the display area 330. At this time, as illustrated in FIG. 18, transition information 329 may be displayed within the transition destination image 334 displayed after the transition manipulation. The transition information 329 is information regarding a region present in a direction in which the transition display image 332 transitions and is an image indicating information regarding an area which is further ahead than the area in which the transition destination image 334 is displayed. The transition information 329 indicates, for example, a prefecture name, a province name, or a landmark such as a station or a representative building and is displayed as a sign such as text information or a map sign or an image such as a still image. As in the example illustrated in FIG. 18, a display position or form of the transition information 329 may be changed to correspond to a direction in which the landmark or the like indicated by the transition information 329 is located. For example, the transition information 329 may be displayed as an image including a balloon or an arrow so that the direction in which the landmark is located can be understood. For example, when the transition destination image 334 can be transitioned and displayed as in the fourth display example, the display position of the transition information 329 may be changed to correspond to the transition of the transition destination image 334.

In regard to the transition information 329, the granularity of the displayed transition information 329 may be changed based on the transition manipulation amount. The granularity of the transition information 329 may correspond to, for example, a landmark or the like that may or may not be displayed depending on a scale of a map. In the example illustrated in FIG. 18, when the transition manipulation amount is small, as illustrated on the upper side of FIG. 18, information regarding the landmark such as a station or the like near a transition destination is shown as the transition information 329 to correspond to the granularity of the transition destination image 334. Conversely, when the transition manipulation amount is large, as illustrated on the lower side of FIG. 18, information regarding granularity coarser than information such as a prefecture name present in the direction of the transition destination displayed in the transition destination image 334 is shown as the transition information 329.

In the example illustrated in FIG. 18, the transition information 329 is displayed in the transition destination image 334, but an embodiment of the present disclosure is not limited to this example. For example, the transition destination image 334 is not shown as a map image illustrated in FIG. 18 and the transition information 329 may be displayed as the transition destination image 334. In this case, information such as a landmark present in the display area 333 after the transition may be displayed as the transition destination image 334.

The fifth display example of the information processing apparatus 100 according to the embodiment has been described above. In this display example, the transition information 329 is displayed in the display area 330 through the transition manipulation. Thus, in addition to information regarding the transition destination image 334, the user can also confirm information which is not further displayed and is ahead of the information to easily find the target place.

The information processing apparatus 100 according to the second embodiment has been described above. In the embodiment, the display control unit 146 displays the transition destination image 334 indicating the transition display image 332 displayed after the transition in the display area 330 after the transition manipulation is performed on the transition display image 332 using the map as an example of the transition display image 332. Thus, the user can recognize, before the transition ends, whether the target place will be present after the transition from the details of the transition destination image 334 and can further determine whether or not to transition the transition display image 332 to easily find the target place.

### <3. Third embodiment (display content: car navigation)>

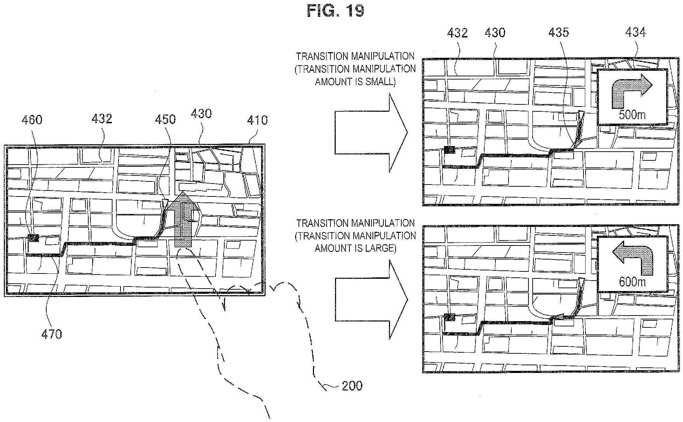

Next, a display form of an information processing apparatus 100 according to a third embodiment of the present disclosure will be described with reference to FIGS. 2 and 19. In the embodiment, the information processing apparatus 100 according to the embodiment displays a map, a current position, a route up to a target position, or the like which can be transitioned and displayed, as content. A process according to the embodiment can be applied to, for example, car navigation. FIG. 19 is an explanatory diagram illustrating a display form of the information processing apparatus 100 according to the third embodiment of the present disclosure. The configuration of the information processing apparatus 100 according to the embodiment is the same as the configuration of that of the first embodiment illustrated in FIG. 2. Hereinafter, a case in which a display process according to the embodiment is applied to car navigation will be described.

Referring to the left side of FIG. 19, a transition display image 432 which is a map is assumed to be displayed in a display area 430 of a display unit 410, as in the second embodiment. At this time, for example, a current position 450 indicating the current position of a car, a target position 460, and a route 470 up to the target position are further displayed in the transition display image 432 by a navigation function.

In the embodiment, the display control unit 146 can display a transition destination image 434 in the display area 430 based on a transition manipulation with a manipulator 200. That is, the user is assumed to perform a transition manipulation such as a flicking manipulation on the transition display image 432 with the manipulator 200 in order to change a display area of the map which is the transition display image 432 displayed in the display area 430. At this time, the display control unit 146 displays the transition destination image 434 in the display area 430. The transition destination image 434 is, for example, an image that indicates a junction such as a turning corner in front of the current position 450 on the route 470. In the example illustrated in the top and bottom right of FIG. 19, for example, directions of right and left turns at the junction in front of the current position 450 and a distance from the current position 450 to the junction are shown as the transition destination image 434. At this time, a display point 435 after the transition is displayed in the area of the transition display image 432 corresponding to the details of the transition destination image 434. Thus, the user can display information such as the junction in the display area 430 through a simple manipulation when the information is necessary, and thus can easily confirm the route 470.

Here, the display control unit 146 may display another transition destination image 434 in the display area 430 based on the transition manipulation amount of the manipulator 200. The transition manipulation amount is, for example, a manipulation speed of the manipulator 200 calculated by the manipulation amount calculation unit 142. At this time, for example, when the transition manipulation amount is small, the display control unit 146 displays information at a junction which is one block ahead of the current position 450 present on the route 470 as the transition destination image 434 in the display area 430. Conversely, for example, when the transition manipulation amount is large, the display control unit 146 displays information at a junction which is two blocks ahead of the current position 450 present on the route 470 as the transition destination image 434 in the display area 430. In the example illustrated in FIG. 19, when the transition manipulation amount is small, the display control unit 146 displays information regarding a right turn at a position 500 meters ahead, which is information regarding the junction which is one block ahead, as the transition destination image 434 in the display area 430. For example, when the transition manipulation amount is large, the display control unit 146 displays information regarding a left turn at a position 600 meters ahead, which is information regarding the junction which is two blocks ahead, as the transition destination image 434 in the display area 430. Thus, the user can display desired information from the plurality of pieces of information regarding the junction which is one block ahead or the junction which is two blocks ahead as the transition destination image 434 in the display area 430 through a simple manipulation.

The transition display image 432 according to the embodiment is an image that indicates content including a map as in the second embodiment. Therefore, the embodiment can also be applied likewise to each display example described in the second embodiment.

The information processing apparatus 100 according the third embodiment has been described above. In the embodiment, the display control unit 146 displays the transition destination image 434 indicating the information at the front junction based on the transition manipulation on the transition display image 432 displayed on the display unit 410 in the display area 430. Thus, the user can display information such as the junction in the display area 430 through a simple manipulation when the information is necessary, and thus can easily confirm the route 470.

In the embodiment, the display control unit 146 displays another transition destination image 434 in the display area 430 based on the transition manipulation amount. Thus, the user can display desired information from the plurality of pieces of information regarding the junction which is one block ahead or the junction which is two blocks ahead as the transition destination image 434 in the display area 430 through a simple manipulation.

### <4. Fourth embodiment (display content: moving image)>

### [4-1. First display example (basic display method)]

Next, a display form of an information processing apparatus 100 according to a fourth embodiment of the present disclosure will be described. The information processing apparatus 100 according to the embodiment displays a moving image or the like which can be transitioned and displayed as content. A process according to the embodiment can be applied to, for example, a moving image reproduction application.

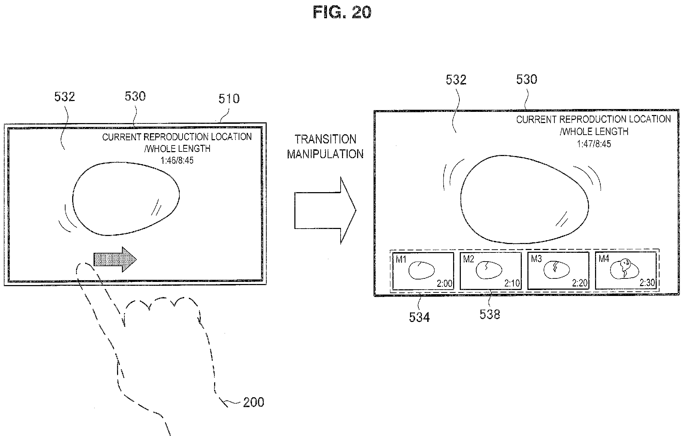

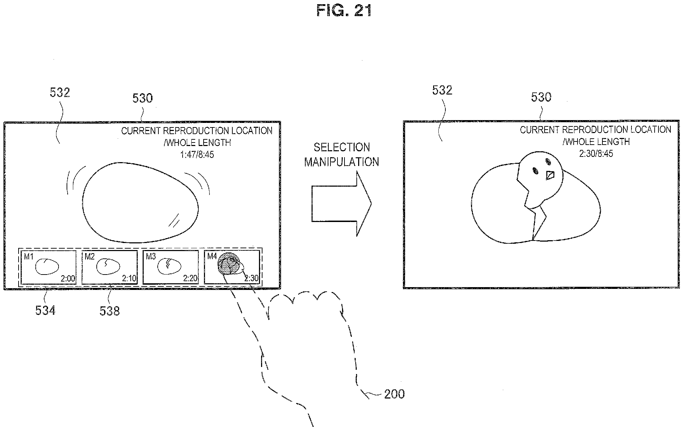

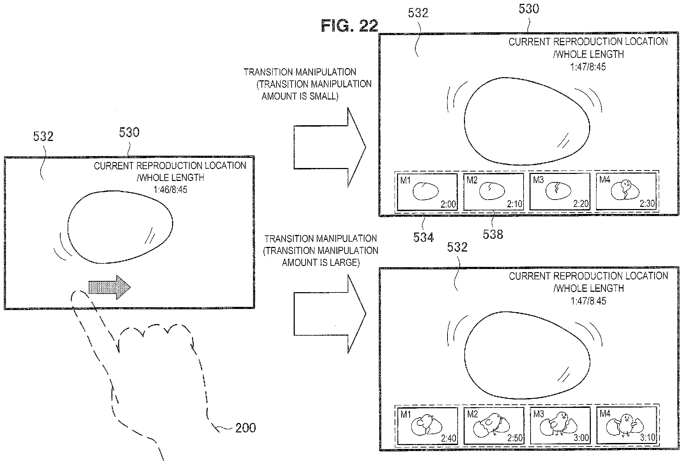

First, a first display example in the information processing apparatus 100 according to the embodiment will be described with reference to FIGS. 2 and 20 to 22. FIG. 20 is an explanatory diagram illustrating the first display example in the information processing apparatus 100 according to the embodiment. FIG. 21 is an explanatory diagram illustrating a display form through a selection manipulation performed after a transition manipulation of the display example. FIG. 22 is an explanatory diagram illustrating a display form according to a difference in a transition manipulation amount in the display example. The configuration of the information processing apparatus 100 according to the embodiment is the same as the configuration of that of the first embodiment illustrated in FIG. 2.

Hereinafter, a case in which a display process according to the embodiment is applied to a moving image reproduction application will be described. In a normal moving image reproduction application, a video does not transition merely due to a transition manipulation such as a flicking manipulation or a dragging manipulation with the manipulator 200 and reproduction of a moving image continues. Thus, in the embodiment, the description will be made below on the assumption that the video does not transition merely due to a transition manipulation either.

Referring to FIG. 20, a display unit 510 displays a video such as a moving image which is an image which can be transitioned and displayed as a transition display image 532. A current reproduction position and the whole length of a reproduction time of the video are shown in the transition display image 532. In an example illustrated on the left side of FIG. 20, a video at the position of 1 minute and 46 seconds in a moving image during reproduction is displayed.

The transition in the embodiment refers to transition of a reproduced temporal position to another temporal position. Specifically, the transition is, for example, movement of a reproduction position from a current reproduction position by a time determined as 30 seconds, 1 minute, or 5 minutes through a transition manipulation. The transition is, for example, movement of a reproduction position over a boundary of chapters partitioned in advance through a transition manipulation. The transition is, for example, reproduction at another speed such as a higher speed or a lower speed than a normally reproduced reproduction speed through a transition manipulation.

In the example illustrated in FIG. 20, a transition manipulation is assumed to be performed to the right, which is set as a direction in which the reproduction position advances, with the manipulator 200 in the transition display image 532. The transition manipulation is performed through, for example, a flicking manipulation or a dragging manipulation. The display control unit 146 displays a transition destination image 534 on the lower side of a display area 530 based on a transition manipulation with the manipulator 200, as illustrated on the right side of FIG. 20.

The transition destination image 534 is an image that includes a representative object 538 or the like of the transition display image 532 displayed in the display area 530 after the transition. In the embodiment, the representative object 538 of the transition display image 532 at a reproduction position finally transitioning through a transition manipulation on the transition display image 532 and the representative object 538 of each chapter retraced by a predetermined number from the representative object 538 are displayed in the transition destination image 534. Here, a collection obtained by partitioning the reproduction position of the moving image at intervals of a predetermined time or a collection segmented by any partition position set by a user is referred to as one chapter. For example, the chapter may be a collection partitioned at intervals of 10 seconds or may be a collection with a different length set by the user. In the example illustrated on the right side of FIG. 20, the display control unit 146 displays the representative objects 538 of chapters M1 to M4 (the reproduction positions of 2 minutes and 00 seconds to 2 minutes and 30 seconds) which are chapters ahead of 1 minute and 46 seconds which is the current reproduction position.

The representative object 538 is, for example, a still image at a reproduction position determined under a given condition such as a beginning time or a middle time of the chapter or a video near the reproduction position when the chapter is set by the partition of each predetermined time. When the representative object 538 is a video near the determined reproduction position, the representative object 538 may be reproduced as a video. The representative object 538 may be, for example, a still image at a reproduction position determined in advance as a representative position of each chapter, a video near the reproduction position, or a still image or a video set in each chapter. The representative object 538 may be, for example, an image of a time representing the chapter or text information such as a chapter name in addition to the foregoing still image or video.

The display position of the transition destination image 534 is not limited to the lower side of the display area 530 as in the right side of FIG. 20, but the transition destination image 534 may be displayed at any position. For example, the display position of the transition destination image 534 may be displayed based on a direction of the transition manipulation or a touch position of the manipulator 200. The transition destination image 534 may be displayed, for example, by arranging the representative objects 538 vertically.

Thus, the user confirms the details of the transition destination image 534 and easily finds the target display position by displaying the transition destination image 534 indicating the transition display image 532 displayed after the transition in the display area 530 according to the transition manipulation on the transition display image 532.

In this display example, when the representative object 538 is selected through a selection manipulation with the manipulator 200 among the representative objects 538 displayed in the transition destination image 534, the transition display image 532 corresponding to the selected representative object 538 may be displayed in the display area 530. For example, as illustrated on the left side of FIG. 21, the detection unit 120 is assumed to detect that a selection manipulation such as touch manipulation with the manipulator 200 is performed on the representative object 538 of the chapter M4 of the transition destination image 534. At this time, as illustrated on the right side of FIG. 21, the display control unit 146 transitions the transition display image 532 to the reproduction position of 2 minutes and 30 seconds which is the start position of the chapter M4 to display the transition display image 532 in the display area 530.

Thus, the user can transition the video to the target reproduction position with high precision by transitioning the transition display image 532 up to the reproduction position corresponding to the representative object 538 selected from the transition destination image 534.

The display control unit 146 may display another transition destination image 534 in the display area 530 based on a transition manipulation amount. The transition manipulation amount is, for example, a manipulation speed of the manipulator 200 calculated by the manipulation amount calculation unit 142. At this time, for example, when the transition manipulation amount is small, the display control unit 146 displays the representative object 538 at a reproduction position close to the reproduction position displayed in the display area 530 in the transition destination image 534. For example, when the transition manipulation amount is large, the display control unit 146 displays the representative object 538 at a reproduction position distant from the reproduction position displayed in the display area 530 in the transition destination image 534. For example, as illustrated in FIG. 22, when the transition manipulation amount is small, the chapters M1 to M4 (2 minutes and 00 seconds to 2 minutes and 30 seconds) and the representative object 538 at a position close to the current reproduction position are shown in the displayed transition destination image 534. Conversely, when the transition manipulation amount is large, the chapters M6 to M8 (2 minutes and 40 seconds to 3 minutes and 10 seconds) and the representative object 538 at a position distant from the current reproduction position are shown in the displayed transition destination image 534.

The first display example of the information processing apparatus 100 according to the embodiment has been described above. In this display example, the display control unit 146 displays the transition destination image 534 after the transition manipulation. Thus, the user confirms the details of the transition destination image 534 and easily finds the target display position. In this display example, when the representative object 538 of the transition destination image 534 is selected, the display control unit 146 transitions the transition display image 532 up to the reproduction position corresponding to the selected representative object 538. Thus, the user can transition the video to the target reproduction position with high precision.

In this display example, the display control unit 146 may display another transition destination image 534 in the display area 530 based on a transition manipulation amount. Thus, since the user can adjust the transition manipulation amount, the user can display the transition destination image 534 including the reproduction position of the target video with high precision, and thus can easily find the reproduction position of the target video.

### [4-2. Second display example (display in which granularity is changed)]

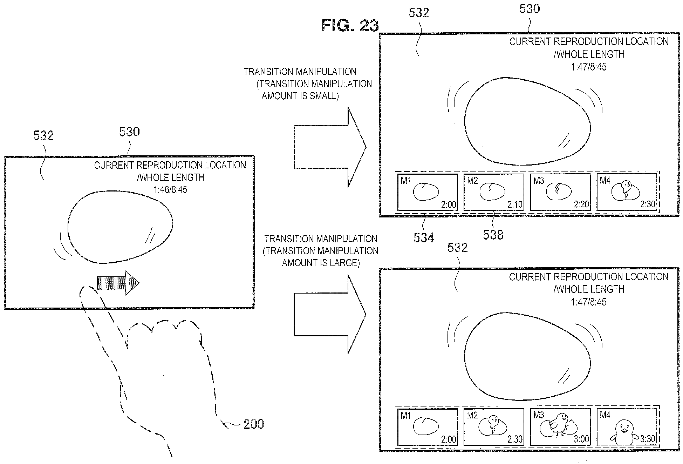

Next, a second display example in the information processing apparatus 100 according to the embodiment will be described with reference to FIG. 23. FIG. 23 is an explanatory diagram illustrating the second display example in the information processing apparatus 100 according to the embodiment. In this display example, the granularity of the transition destination image 534 is changed for display based on the transition manipulation amount.

In the embodiment, the granularity which is a unit indicating collection of content is, for example, a collection partitioned in a predetermined time unit or a chapter such as collection set in advance by a user or automatically from the details of a video. The granularity of the chapter becomes coarse, for example, as a time by which a moving image is partitioned is longer. For example, the granularity of the chapter becomes coarse, for example, in order from units of 10 seconds, 30 seconds, 1 minute, and 5 minutes.

In this display example, the display control unit 146 changes the granularity of the transition destination image 534 according to the transition manipulation amount and displays the transition destination image 534 in the display area 530. For example, when the transition manipulation amount is small, the display control unit 146 displays the granularity of the transition destination image 534 with fine granularity. When the transition manipulation amount is large, the display control unit 146 displays the transition destination image 534 with coarse granularity. For example, as illustrated in FIG. 23, when the transition manipulation amount is small, the display control unit 146 displays the representative objects 538 of the transition destination image 534 with fine granularity with which a moving image is partitioned in units of 10 seconds, as in the upper side of FIG. 23. In the example illustrated in FIG. 23, when the transition manipulation amount is small, chapters M1 to M4 indicating the reproduction positions of 2 minutes, 2 minutes and 10 seconds, 2 minutes and 20 seconds, and 2 minutes and 30 seconds are displayed as the representative objects 538. Conversely, when the transition manipulation amount is large, the display control unit 146 displays the representative objects 538 of the transition destination image 534 with coarse granularity with which the moving image is partitioned in units of 30 seconds, as in the lower side of FIG. 23. In the example illustrated in FIG. 23, when the transition manipulation amount is large, chapters M1 to M4 indicating the reproduction positions of 2 minutes, 2 minutes and 30 seconds, 3 minutes and 00 seconds, and 3 minutes and 30 seconds are displayed as the representative objects 538.

The second display example of the information processing apparatus 100 according to the embodiment has been described above. In this display example, the display control unit 146 changes the granularity of the transition destination image 534 according to the transition manipulation amount and displays the transition destination image 534. Thus, the user can freely change the transition amount by changing the transition destination image 534 without performing a complicated manipulation, and thus can easily find the target reproduction position.

### [4-3. Third display example (display in which transition destination image is transitioned)]

Next, a third display example in the information processing apparatus 100 according to the embodiment will be described. In this display example, the transition destination image 534 is transitioned based on a transition manipulation on the transition destination image 534.

For example, a transition manipulation is assumed to be performed on the transition destination image 534 with the manipulator 200. The transition manipulation is performed through, for example, a flicking manipulation or a dragging manipulation of the manipulator 200 on the transition destination image 534. At this time, the display control unit 146 transitions the currently displayed transition destination image 534 based on the transition manipulation. For example, the display control unit 146 displays the representative objects 538 arranged before and after the representative object 538 of the currently displayed transition destination image 534 in the display area 530. At this time, a direction in which the transition destination image 534 is transitioned may be determined based on a direction of the transition manipulation. A transition speed may be changed according to the transition manipulation amount of the manipulator 200.

Referring to the upper right diagram of FIG. 23, chapters M1 to M4 are displayed in the transition destination image 534. In this case, when the transition manipulation is performed on the transition destination image 534 in this display example, the display control unit 146 displays the chapters before and after the chapters M1 to M4.

In the embodiment, the transition display image 532 does not transition merely due to a transition manipulation such as a flicking manipulation or a dragging manipulation, but an embodiment of the present disclosure is not limited to this example. For example, the display control unit 146 may display the transition destination image 534 through the transition manipulation and may transition the transition display image 532 under a determined condition such as a given time. For example, by dividing the transition manipulation into a flicking manipulation and a dragging manipulation or a difference in a manipulation amount such as the number of manipulations or a manipulation speed, the transition manipulation may be detected separately as a manipulation of displaying the transition destination image 534 and a manipulation of transitioning the transition display image 532.

The information processing apparatus 100 according to the fourth embodiment has been described above. In the embodiment, when the transition manipulation is performed on the transition display image 532 displayed in the display area 530, the display control unit 146 displays the transition destination image 534 indicating the transition display image 532 displayed after the transition in the display area 530. Thus, the user confirms the details of the transition destination image 534 and easily finds the target display position.

In the embodiment, the transition display image 532 does not transition merely due to a transition manipulation such as a flicking manipulation or a dragging manipulation, but an embodiment of the present disclosure is not limited to this example. For example, the display control unit 146 may display the transition destination image 534 through the transition manipulation and may transition the transition display image 532 under a determined condition such as a given time. For example, by dividing the transition manipulation into a flicking manipulation and a dragging manipulation or a difference in a manipulation amount such as the number of manipulations or a manipulation speed, the transition manipulation may be detected separately as a manipulation of displaying the transition destination image 534 and a manipulation of transitioning the transition display image 532.

The information processing apparatus 100 according to the embodiment displays a moving image or the like which can be transitioned as content, but an embodiment of the present disclosure is not limited to related examples. For example, the information processing apparatus 100 according to an embodiment of the present disclosure may display and reproduce music as displayed content. In this case, a reproduction time, the lyrics, or the like of the transition destination may be displayed as the representative object 538 of the transition destination image 534.

### <5. Fifth embodiment (display content: electronic book)>

### [5-1. First display example (basic display method)]

Next, a display form of an information processing apparatus 100 according to a fifth embodiment of the present disclosure will be described. The information processing apparatus 100 according to the embodiment displays, as content, an electronic book or the like in which text or an image which can be transitioned and displayed can be transitioned and displayed like a page being turned. A process according to the embodiment can be applied to, for example, an electronic book application.

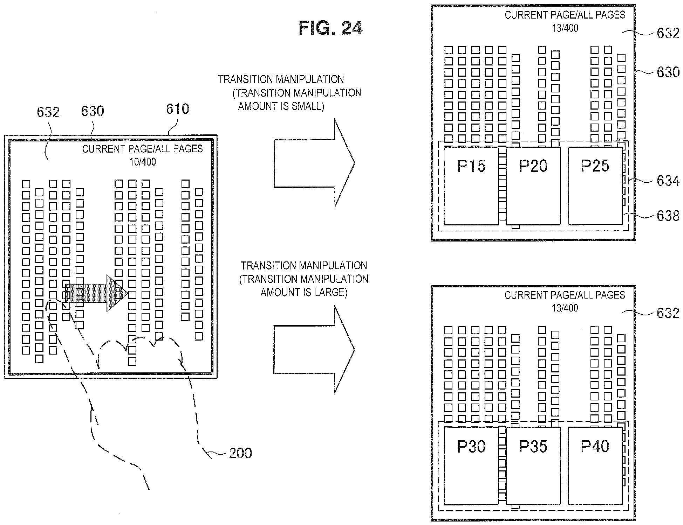

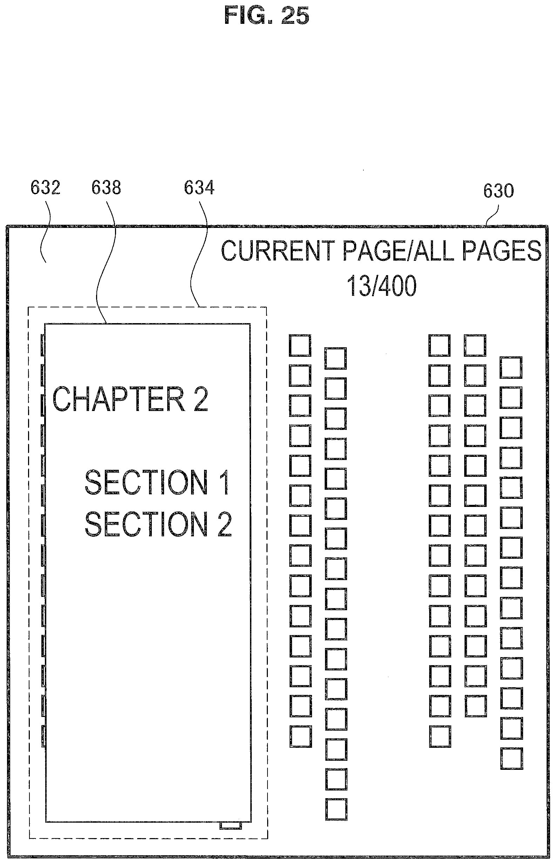

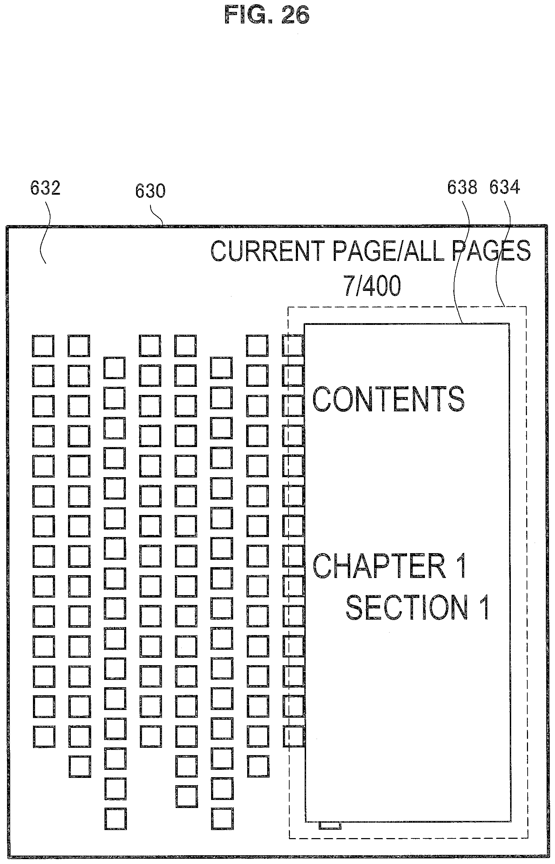

First, a first display example in the information processing apparatus 100 according to the embodiment will be described with reference to FIGS. 2 and 24 to 26. FIG. 24 is an explanatory diagram illustrating the first display example in the information processing apparatus 100 according to the embodiment. FIG. 25 is an explanatory diagram illustrating a pattern in which a transition destination image is displayed on the right side in the display example. FIG. 26 is an explanatory diagram illustrating a pattern in which a transition destination image is displayed on the left side in the display example. The configuration of the information processing apparatus 100 according to the embodiment is the same as the configuration of that of the first embodiment illustrated in FIG. 2. Hereinafter, a case in which a display process according to the embodiment is applied to an electronic book application will be described.

Referring to FIG. 24, a certain page of the electronic book which is a transition display image 632 is displayed in a display area 630 of a display unit 610. A current page and all pages of the electronic book are displayed in the display area 630. For example, in the embodiment, a certain page of the transition display image 632 displayed in the display area 630 transitions through a transition manipulation, so that pages before and after the certain page are displayed in the display area. In the example illustrated on the left side of FIG. 24, page 10 of the electronic book is displayed in the display area 630. For example, when a page is turned forward, the transition manipulation is performed through a flicking manipulation or a dragging manipulation with a manipulator in a direction of a next page, e.g., to the right side. Conversely, when a page is turned backward, the transition manipulation is performed through a flicking manipulation or a dragging manipulation with the manipulator in a direction of a previous page, e.g., to the left side.

In the example illustrated in FIG. 24, when the transition display image 632 is subjected to a transition manipulation with the manipulator 200, the display control unit 146 transitions the page of the transition display image 632 displayed in the display area 630 through the transition manipulation and displays a transition destination image 634 on the lower side of the display area 630.

Here, in the electronic book application according to the embodiment, display control is normally performed to transition the pages one by one through a one-time transition manipulation. In order to avoid confusion with a normal transition manipulation, in the embodiment, the transition destination image 634 is displayed in the display area 630, for example, when the transition manipulation is performed a predetermined number of times or more within a predetermined time (for example, three or more times in 2 seconds).

The transition destination image 634 is a representative object 638 that represents the transition display image 632 displayed by transition. In the example illustrated in FIG. 24, a collection in which the number of pages is partitioned for every 5 pages is set as one file and representative objects of files P15 to P25 before page 13, which is the current page are displayed. The representative object 638 is, for example, a page number or a sentence of a beginning page of the file, a chapter or section number, a title of a chapter or section. The file is, for example, a collection divided at a predetermined page or a collection divided in units according to a structure, such as chapters, sections, or the like.

The display position of the transition destination image 634 is not limited to the lower side of the display area 630 as in FIG. 24, but the transition destination image 634 may be displayed at any position inside the display area 630. For example, the display position of the transition destination image 634 may be determined based on a touch position of the manipulator 200 or a direction of the transition manipulation, as in FIGS. 25 and 26.

Referring to FIGS. 25 and 26, the display control unit 146 displays the transition destination image 634 on the right side or the left side of the display area 630. The display form of the transition destination image 634 illustrated in FIG. 25 is a display form when the transition manipulation is performed in a direction of returning to a previous page. On the other hand, the display form of the transition destination image 634 illustrated in FIG. 26 is a display form when the transition manipulation is performed in a direction of advancing to a next page. By displaying the transition destination image 634 to correspond to the direction in which the page moves, the user can perform the manipulation and view the image without a sense of discomfort.

Here, the display control unit 146 may display the transition display image 632 of the corresponding page of the selected representative object 638 in the display area 630 based on a selection manipulation on the representative object 638 of the transition destination image 634. For example, when the representative object 638 of the file P20 is assumed to be selected from the transition destination image 634 illustrated on the upper right side of FIG. 24, the display control unit 146 transitions the transition display image 632 displayed in the display area 630 and displays the details of the 20th page of the transition display image 632 to which the selected representative object 638 corresponds in the display area 630. At this time, the transition may be performed at a higher speed than a normal speed or the details of the 20th page of the transition display image 632 may be directly displayed in the display area 630.

The display control unit 146 may vary the display details of the transition destination image 634 in the display area 630 based on a transition manipulation amount for the transition display image 632. For example, when the transition manipulation amount is small, the display control unit 146 displays the representative object 638 of a page close to the current page displayed in the display area 630. Conversely, when the transition manipulation amount is large, the display control unit 146 displays the representative object 638 of a page distant from the current page. In the example illustrated in FIG. 24, when the transition manipulation amount is small, the display control unit 146 displays the files P15 to P25 and the representative object 638 of a page close to the current page. Conversely, when the transition manipulation amount is large, the display control unit 146 displays the files P30 to P40 and the representative object 638 of a page distant from the current page.

The first display example of the information processing apparatus 100 according to the embodiment has been described above. In this display example, the transition destination image 634 is displayed after the transition manipulation. Thus, the user easily recognizes at which file a target page is located from the details of the transition destination image 634 and easily find the target page. In this display example, by selecting the transition destination image 634, the displayed page of the transition display image 632 is transitioned. Thus, the user can display the page corresponding to the file including the target page in the display area 630 at a high speed, and thus it is possible to shorten a time that the user spends finding for the target page.

In this display example, the display control unit 146 displays another transition destination image 634 based on a transition manipulation amount. Thus, the user displays the transition destination image 634 corresponding to any transition destination by adjusting the transition manipulation amount, and thus easily finds for the target page.

### [5-2. Second display example (display in which granularity is changed)]

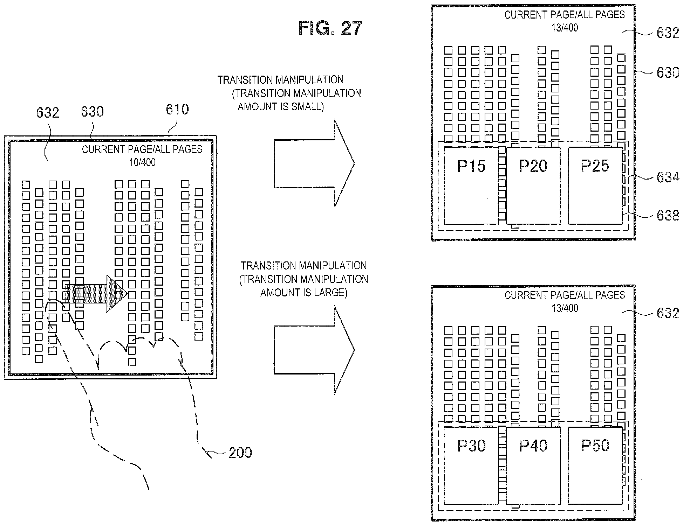

Next, a second display example in the information processing apparatus 100 according to the embodiment will be described with reference to FIG. 27. FIG. 27 is an explanatory diagram illustrating the second display example in the information processing apparatus 100 according to the embodiment. In this display example, the granularity of the transition destination image 634 is changed for display based on the transition manipulation amount.

The granularity, which is a unit indicating collection of content, in this embodiment is represented by, for example, a collection divided at a predetermined page or a collection divided in units according to a structure, such as chapters, sections, or the like. For example, the granularity of the file becomes coarse as the number of pages at which a book is divided increases. For example, the granularity becomes coarse as the structural classification unit or file unit of a book, such as pages, sections, or chapters, increases.

In this display example, the display control unit 146 changes the granularity of the transition destination image 634 according to the transition manipulation amount for transitioning the transition display image 632 and displays the transition destination image 634 in the display area 630. For example, when the transition manipulation amount is small, the display control unit 146 displays the granularity of the transition destination image 634 as fine granularity. When the transition manipulation amount is large, the display control unit 146 displays the transition destination image 634 with coarse granularity. In the example illustrated in FIG. 27, when the transition manipulation amount is small, as illustrated on the upper right side of FIG. 27, the display control unit 146 displays, for example, the representative object 638 of each file into which the book is partitioned in units of 5 pages and is set with fine granularity in the transition destination image 634. Conversely, when the transition manipulation amount is large, as illustrated on the lower right side of FIG. 27, the display control unit 146 displays, for example, the representative object 638 of each file into which the book is partitioned in units of 10 pages and is set with coarse granularity in the transition destination image 634. Thus, the user can change the display granularity of the transition destination image 634 without performing a complicated manipulation by changing the transition manipulation amount of the transition display image 632.

The second display example of the information processing apparatus 100 according to the embodiment has been described above. In this display example, when the transition destination image 634 is displayed through the transition manipulation on the transition display image 632, the display control unit 146 changes the granularity of the transition destination image 634 according to the transition manipulation amount of the transition display image 632 to display the transition destination image 634. Thus, the user can change the display granularity of the transition destination image 634 without performing a complicated manipulation. When the user selects the representative object 638, the user can also change the transition amount of the book by changing the granularity of the representative object 638 of the transition destination image 634, and thus the user easily finds a target reproduction position.

### [5-3. Third display example (display in which transition destination image is transitioned)]

Next, a third display example in the information processing apparatus 100 according to the embodiment will be described. In this display example, the transition destination image 634 is transitioned based on a transition manipulation on the transition destination image 634.

For example, the transition destination image 634 is assumed to be displayed in the display area 630 through a transition manipulation on the transition display image 632. When the transition manipulation is performed on the transition destination image 634 with the manipulator 200, the display control unit 146 transitions the displayed transition destination image 634 based on the transition manipulation. For example, the display control unit 146 displays the representative objects 638 arranged before and after the representative object 638 of the currently displayed transition destination image 634 in the display area 630. At this time, a direction in which the transition destination image 634 is transitioned may be determined based on a direction of the transition manipulation. A transition speed may be changed according to the transition manipulation amount of the manipulator 200. The transition manipulation on the transition destination image 634 is performed through, for example, a flicking manipulation or a dragging manipulation on the transition destination image 634 with the manipulator 200.

Referring to the upper right drawing of FIG. 24, the representative objects 638 of the files P15 to P25 are displayed in the transition destination image 634. At this time, for example, when a transition manipulation such as a flicking manipulation is performed on the transition destination image 634 with the manipulator 200 from the left to the right in the display area of the transition destination image 634, the display control unit 146 displays the chapters before and after the files P15 to P25.

The third display example of the information processing apparatus 100 according to the embodiment has been described above. In this example, the transition destination image 634 is transitioned and displayed based on the transition manipulation on the transition destination image 634. Thus, the user can view more transition destination images 634, and thus can easily find a target page.

### <6. Sixth embodiment (display content: mail, SNS, or the like)>

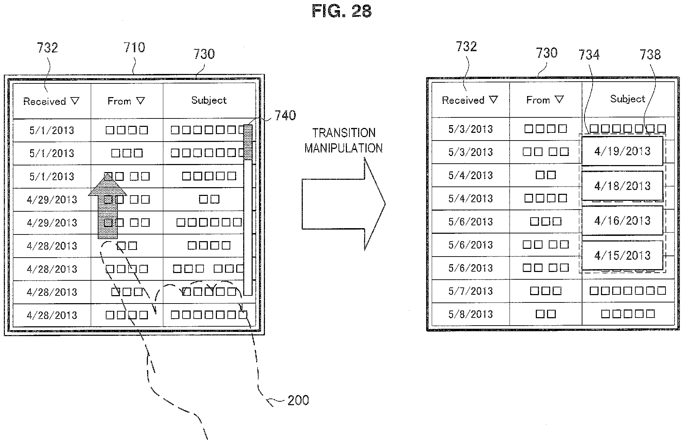

Next, a display form of an information processing apparatus 100 according to a sixth embodiment of the present disclosure will be described with reference to FIGS. 2 and 28. The information processing apparatus 100 according to the embodiment displays mail, a message, or the like which can be transitioned and displayed, as content. A process according to the embodiment can be applied to, for example, a mail application, an application corresponding to SNS, or a web site. FIG. 28 is an explanatory diagram illustrating the display form of the information processing apparatus 100 according to the sixth embodiment of the present disclosure. The configuration of the information processing apparatus 100 according to the embodiment is the same as the configuration of that of the first embodiment illustrated in FIG. 2.

Referring to FIG. 28, as illustrated on the right side of FIG. 28, for example, an image indicating information regarding mail or messages, such as reception dates, senders, subjects, and the like, is displayed as a transition display image 732 in a display area 730 of a display unit 710 of the information processing apparatus 100. A scroll bar 740 may be displayed in the display area 730. The mail or the messages of the transition display image 732 are displayed in, for example, the order of reception times on the reception dates, alphabetical order according to names or addresses of the senders, or alphabetical according to the text of the subjects. In the example illustrated in FIG. 28, the mail or the messages are displayed in the order of reception times. When the amount of mail or messages is large, all of the mail or messages may not be displayed in the display area 730. Thus, the user can view all of the mail by transitioning the transition display image 732 with the manipulator 200 in an arrangement direction of the mail or the messages through a transition manipulation.

When the transition manipulation is performed on the transition display image 732 displayed in the display area 730 with the manipulator 200, as illustrated on the left side of FIG. 28, the display control unit 146 displays the transition destination image 734 in the display area 730, as illustrated on the right side of FIG. 28. The transition destination image 734 is an image that includes a plurality of representative objects 738 indicating the mail or the messages finally displayed in the display area 730 after the transition display image 732 or the like transitions through the transition manipulation.

The representative object 738 is an image that represents a file in which the mail or the messages are collected in certain units. The representative object 738 is text or an image that indicates a file or is text or an image that indicates certain mail or a message in the file. The files are changed according to the display order of the mail or the messages. For example, when the display order of the mail or the messages is the order of the reception dates, a file is a collection of the mail or the messages in units of days, weeks, months, years, or the like of the reception dates. For example, when the display order of the mail or the messages is alphabetical order according to addresses of the senders, a file is a collection in units of single addresses, addresses sharing a first letter, or the like is a file. The granularity of the collection of the files is the granularity of the transition destination image 734. For example, the granularity becomes coarse in the order of units of days, weeks, months, and years of the files

In the example illustrated in FIG. 28, the files are collected in units of days. In this case, the representative object 738 of the file of "15 April, 2013" finally displayed after the transition of the transition display image 732 and the representative objects 738 of the files of "16 April, 2013 to 19 April, 2013" earlier in the display order than that day are displayed in the display area 730. Thus, when the transition display image 732 transitions at a high speed, the user can comprehend the mail or the message displayed in the transition destination or during the transition by the transition destination image 734, and thus can easily find target content.

In the embodiment, when one of the representative objects 738 displayed in the transition destination image 734 is selected through a touch manipulation or the like of the manipulator 200, the display control unit 146 may transition the transition display image 732 to a transition destination corresponding to the representative object 738 of the selected transition destination image 734.

The process which can be performed by the information processing apparatus 100 according to the embodiment is not limited to related examples. For example, as in each display example of the first embodiment, the information processing apparatus 100 can perform display in which granularity of the transition destination image 734 is changed, a display form of the transition destination image 734 is changed, or the transition destination image 734 is transitioned according to a transition manipulation amount.

The information processing apparatus 100 according to the sixth embodiment has been described above. In the embodiment, the transition destination image 734 is displayed by the transition manipulation. Thus, when the transition display image 732 transitions at a high speed, the user can comprehend the transition display image 732 displayed in the transition destination or during the transition, and thus can easily find the target content.

### <7. Hardware configuration>

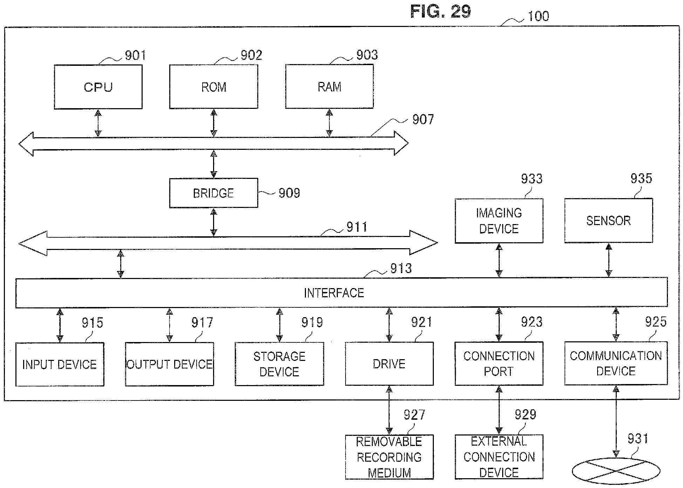

Next, a hardware configuration of an information processing apparatus 100 according to an embodiment of the present disclosure will be described with reference to FIG. 29. FIG. 29 is a block diagram for describing the hardware configuration of the information processing apparatus 100. For example, the illustrated information processing apparatus 100 can be realized as the information processing apparatus 100 according to the foregoing embodiment.

The information processing apparatus 100 includes a CPU (Central Processing Unit) 901, a ROM (Read Only Memory) 903, and a RAM (Random Access Memory) 905. In addition, the information processing apparatus 100 may include a host bus 907, a bridge 909, an external bus 911, an interface 913, an input device 915, an output device 917, a storage device 919, a drive 921, a connection port 923, and a communication device 925. Further, the information processing apparatus 100 may include an imaging device 933 and a sensor 935 as necessary. The information processing apparatus 100 may include a processing circuit such as a DSP (Digital Signal Processor) or ASIC (Application Specific Integrated Circuit), alternatively or in addition to the CPU 901.

The CPU 901 serves as an operation processor and a controller, and controls all or some operations in the information processing apparatus 100 in accordance with various programs recorded in the ROM 903, the RAM 905, the storage device 919 or a removable recording medium 927. The ROM 903 stores programs and operation parameters which are used by the CPU 901. The RAM 905 temporarily stores program which are used in the execution of the CPU 901 and parameters which are appropriately modified in the execution. The CPU 901, ROM 903, and RAM 905 are connected to each other by the host bus 907 configured to include an internal bus such as a CPU bus. In addition, the host bus 907 is connected to the external bus 911 such as a PCI (Peripheral Component Interconnect/Interface) bus via the bridge 909.

The input device 915 is a device which is operated by a user, such as a mouse, a keyboard, a touch panel, a proximity panel, buttons, switches and a lever. The input device 915 may be, for example, a remote control unit using infrared light or other radio waves, or may be an external connection device 929 such as a portable phone operable in response to the operation of the information processing apparatus 100. Furthermore, the input device 915 includes an input control circuit which generates an input signal on the basis of the information which is input by a user and outputs the input signal to the CPU 901. By operating the input device 915, a user can input various types of data to the information processing apparatus 100 or issue instructions for causing the information processing apparatus 100 to perform a processing operation.

The output device 917 includes a device capable of visually or audibly notifying the user of acquired information. The output device 917 may include a display device such as an LCD (Liquid Crystal Display), a PDP (Plasma Display Panel), and an organic EL (Electro-Luminescence) displays, an audio output device such as a speaker or a headphone, and a peripheral device such as a printer. The output device 917 may output the results obtained from the process of the information processing apparatus 100 in a form of a video such as text or an image, and an audio such as voice or sound.

The storage device 919 is a device for data storage which is configured as an example of a storage unit of the information processing apparatus 100. The storage device 919 includes, for example, a magnetic storage device such as a HDD (Hard Disk Drive), a semiconductor storage device, an optical storage device, or a magneto-optical storage device. The storage device 919 stores programs to be executed by the CPU 901, various data, and data obtained from the outside.

The drive 921 is a reader/writer for the removable recording medium 927 such as a magnetic disk, an optical disk, a magneto-optical disk, or a semiconductor memory, and is embedded in the information processing apparatus 100 or attached externally thereto. The drive 921 reads information recorded in the removable recording medium 927 attached thereto, and outputs the read information to the RAM 905. Further, the drive 921 writes in the removable recording medium 927 attached thereto.

The connection port 923 is a port used to directly connect devices to the information processing apparatus 100. The connection port 923 may include a USB (Universal Serial Bus) port, an IEEE1394 port, and a SCSI (Small Computer System Interface) port. The connection port 923 may further include an RS-232C port, an optical audio terminal, an HDMI (registered trademark) (High-Definition Multimedia Interface) port, and so on. The connection of the external connection device 929 to the connection port 923 makes it possible to exchange various data between the information processing apparatus 100 and the external connection device 929.

The communication device 925 is, for example, a communication interface including a communication device or the like for connection to a communication network 931. The communication device 925 may be, for example, a communication card for a wired or wireless LAN (Local Area Network), Bluetooth (registered trademark), WUSB (Wireless USB) or the like. In addition, the communication device 925 may be a router for optical communication, a router for ADSL (Asymmetric Digital Subscriber Line), a modem for various kinds of communications, or the like. The communication device 925 can transmit and receive signals to and from, for example, the Internet or other communication devices based on a predetermined protocol such as TCP/IP. In addition, the communication network 931 connected to the communication device 925 may be a network or the like connected in a wired or wireless manner, and may be, for example, the Internet, a home LAN, infrared communication, radio wave communication, satellite communication, or the like.

The imaging device 933 is a device that generates an image by imaging a real space using an image sensor such as a charge-coupled device (CCD) or a complementary metal-oxide-semiconductor (CMOS) sensor, as well as various members such as one or more lenses for controlling the formation of a subject image on the image sensor, for example. The imaging device 933 may be a device that takes still images, and may also be a device that takes moving images.

The sensor 935 is any of various sensors such as an acceleration sensor, a gyro sensor, a geomagnetic sensor, an optical sensor, a sound sensor, or an air pressure sensor, for example. The sensor 935 acquires information regarding the state of the information processing apparatus 100, such as the orientation of the case of the information processing apparatus 100, as well as information regarding the environment surrounding the information processing apparatus 100, such as the brightness or noise surrounding the information processing apparatus 100, for example. The sensor 935 may also include a Global Positioning System (GPS) sensor that receives GPS signals and measures the latitude, longitude, and altitude of the apparatus.

The foregoing thus illustrates an exemplary hardware configuration of the information processing apparatus 100. Each of the above components may be realized using general-purpose members, but may also be realized in hardware specialized in the function of each component. Such a configuration may also be modified as appropriate according to the technological level at the time of the implementation.

The embodiment of the present disclosure may include the information processing apparatus 100, the information processing method executed in the information processing apparatus 100 or a program for causing the information processing apparatus 100 to realize the method.

Although the preferred embodiments of the present disclosure have been described in detail with reference to the appended drawings, the present disclosure is not limited thereto. It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control is envisaged as aspect of the present invention.

## Claims

1. An information processing apparatus (100) comprising:
a display unit (110) configured to display a transition display image (32), including a plurality of objects (36) indicating content, to be transitioned in a display area (30) of the display unit (110) by inertial scrolling,
a detection unit (120) configured to detect a manipulation input on the information processing apparatus (100), and
a manipulation amount calculation unit (142) configured to calculate a transition manipulation amount of a transition manipulation detected by the detection unit (120) for performing transition display of the transition display image (32) and to determine whether the transition manipulation amount is equal to or greater than a threshold value (Xth),
the information processing apparatus being **characterised by** further comprising:
a control unit (146) configured to, if the transition manipulation amount is equal to or greater than the threshold value (Xth), transition the transition display image through the transition manipulation, and display, in the display area (30) of the display unit (110), a transition destination image (34) indicating display of a transition destination of the transition display image (32) to be transitioned based on the transition manipulation amount calculated by the manipulation amount calculation unit (142), and, if the transition manipulation amount is less than the threshold value (Xth), transition only the transition display image (32) through the transition manipulation without displaying the transition destination image (34) in the display area,
wherein the transition destination image (34) is an image that includes a plurality of representative objects (38) indicating the objects (36) finally displayed in the display area (30) after the transition display image (32) transitions through the transition manipulation.

2. The information processing apparatus (100) according to claim 1, wherein, if it is determined that a selection manipulation is performed on a representative object (38) on the transition destination image (34), the control unit (146) is configured to transition the transition display image (32) displayed on the display unit (110) to the transition display image (32) associated with the selected representative object (38).

3. The information processing apparatus (100) according to claim 2, wherein, based on the manipulation on the transition destination image (34), the control unit (146) is configured to transition the transition display image (32) to the transition destination associated with the transition destination image (34), and to then perform a process associated with the transition display image (32).

4. The information processing apparatus (100) according to claim 1, wherein the control unit (146) is configured to change a display form of the transition destination image (34) based on the transition manipulation amount.

5. The information processing apparatus (100) according to claim 1, wherein the control unit (146) is configured to change a display form of the transition destination image (34) based on a transition speed of the transition display image (32).

6. The information processing apparatus (100) according to claim 1, wherein the transition manipulation amount is determined according to at least one of a manipulation speed of a manipulator of the transition manipulation or the number of manipulations.

7. The information processing apparatus (100) according to claim 1, wherein a transition speed and a transition amount at which the transition display image (32) transitions are changed according to a transition manipulation amount of a transition manipulation.

8. The information processing apparatus (100) according to claim 1, wherein the control unit (146) is configured to change granularity of the transition destination image (34), which is a unit in which the representative objects (38) are collected, in correspondence with the transition manipulation amount.

9. The information processing apparatus (100) according to claim 1, further comprising a communication unit.

10. An information processing method comprising:
displaying a transition display image (32), including a plurality of objects (36) indicating content, to be transitioned in a display area (30) of a display unit (110) by inertial scrolling,
detecting a transition manipulation for performing transition display of the transition display image (32) on the information processing apparatus (100),
calculating a transition manipulation amount of the detected transition manipulation and determining whether the transition manipulation amount is equal to or greater than a threshold value (Xth), and
the information processing method being **characterised by**:
if the transition manipulation amount is equal to or greater than the threshold value (Xth), transitioning the transition display image through the transition manipulation, and displaying, in the display area (30) of the display unit (110), a transition destination image (34) indicating display of a transition destination of the transition display image (32) to be transitioned based on the calculated transition manipulation amount of the detected transition manipulation, and,
if the transition manipulation amount is less than the threshold value (Xth), transitioning only the transition display image (32) through the transition manipulation without displaying the transition destination image (34) in the display area,
wherein the transition destination image (34) is an image that includes a plurality of representative objects (38) indicating the objects (36) finally displayed in the display area (30) after the transition display image (32) transitions through the transition manipulation.

11. A program causing the information processing apparatus of claim 1 to realize the method steps of claim 10.

## Patentansprüche

1. Informationsverarbeitungsvorrichtung (100) umfassend:
eine Anzeigeeinheit (110), die konfiguriert ist, ein Überleitungsanzeigebild (32) anzuzeigen, das eine Vielzahl von Objekten (36) enthält, die Inhalt angeben, der in einem Anzeigebereich (30) der Anzeigeeinheit (110) durch dynamisches Scrollen übergeleitet werden soll,
eine Detektionseinheit (120), die konfiguriert ist, eine Manipulationseingabe auf der Informationsverarbeitungsvorrichtung (100) zu detektieren, und
eine Manipulationsausmaßberechnungseinheit (142), die konfiguriert ist, ein Überleitungsmanipulationsausmaß einer Überleitungsmanipulation, die durch die Detektionseinheit (120) detektiert wird, für eine Durchführung einer Überleitungsanzeige des Überleitungsanzeigebilds (32) zu berechnen und zu bestimmen, ob das Überleitungsmanipulationsausmaß gleich oder größer einem Schwellenwert (Xth) ist,
wobei die Informationsverarbeitungsvorrichtung **gekennzeichnet ist durch** ferner umfassend:
eine Steuereinheit (146), die konfiguriert ist, falls das Überleitungsmanipulationsausmaß gleich oder größer dem Schwellenwert (Xth) ist, das Überleitungsanzeigebild durch die Überleitungsmanipulation überzuleiten und im Anzeigebereich (30) der Anzeigeeinheit (110) ein Überleitungszielortbild (34) anzuzeigen, das eine Anzeige eines Überleitungszielorts des überzuleitenden Überleitungsanzeigebilds (32) basierend auf dem Überleitungsmanipulationsausmaß, das durch die Manipulationsausmaßberechnungseinheit (142) berechnet wurde, angibt, und, falls das Überleitungsmanipulationsausmaß kleiner als der Schwellenwert (Xth) ist, nur das Überleitungsanzeigebild (32) durch die Überleitungsmanipulation überleitet, ohne das Überleitungszielortbild (34) im Anzeigebereich anzuzeigen,
wobei das Überleitungszielortbild (34) ein Bild ist, das eine Vielzahl repräsentativer Objekte (38) enthält, die die Objekte (36) angeben, die letztendlich im Anzeigebereich (30) angezeigt werden, nachdem das Überleitungsanzeigebild (32) durch die Überleitungsmanipulation übergeleitet wurde.

2. Informationsverarbeitungsvorrichtung (100) nach Anspruch 1, wobei, falls bestimmt wird, dass eine Auswahlmanipulation an einem repräsentativen Objekt (38) am Überleitungszielortbild (34) durchgeführt wird, die Steuereinheit (146) konfiguriert ist, das Überleitungsanzeigebild (32), das auf der Anzeigeeinheit (110) angezeigt wird, zu dem Überleitungsanzeigebild (32), das mit dem ausgewählten repräsentativen Objekt (38) verknüpft ist, überzuleiten.

3. Informationsverarbeitungsvorrichtung (100) nach Anspruch 2, wobei, basierend auf der Manipulation am Überleitungszielortbild (34) die Steuereinheit (146) konfiguriert ist, das Überleitungsanzeigebild (32) zum Überleitungszielort überzuleiten, der mit dem Überleitungszielortbild (34) verknüpft ist, und dann einen Prozess durchzuführen, der mit dem Überleitungsanzeigebild (32) verknüpft ist.

4. Informationsverarbeitungsvorrichtung (100) nach Anspruch 1, wobei die Steuereinheit (146) konfiguriert ist, eine Anzeigeform des Überleitungszielortbilds (34) basierend auf dem Überleitungsmanipulationsausmaß zu ändern.

5. Informationsverarbeitungsvorrichtung (100) nach Anspruch 1, wobei die Steuereinheit (146) konfiguriert ist, eine Anzeigeform des Überleitungszielortbilds (34) basierend auf einer Überleitungsgeschwindigkeit des Überleitungsanzeigebilds (32) zu ändern.

6. Informationsverarbeitungsvorrichtung (100) nach Anspruch 1, wobei das Überleitungsmanipulationsausmaß gemäß zumindest einem von einer Manipulationsgeschwindigkeit eines Manipulators der Überleitungsmanipulation oder der Anzahl von Manipulationen bestimmt wird.

7. Informationsverarbeitungsvorrichtung (100) nach Anspruch 1, wobei eine Überleitungsgeschwindigkeit und ein Überleitungsausmaß, mit welchen das Überleitungsanzeigebild (32) übergeleitet wird, gemäß einem Überleitungsmanipulationsausmaß einer Überleitungsmanipulation geändert werden.

8. Informationsverarbeitungsvorrichtung (100) nach Anspruch 1, wobei die Steuereinheit (146) konfiguriert ist, eine Granularität des Überleitungszielortbilds (34), die eine Einheit ist, in der die repräsentativen Objekte (38) gesammelt werden, in Entsprechung mit dem Überleitungsmanipulationsausmaß zu ändern.

9. Informationsverarbeitungsvorrichtung (100) nach Anspruch 1, ferner umfassend eine Kommunikationseinheit.

10. Informationsverarbeitungsverfahren, umfassend:
Anzeigen eines Überleitungsanzeigebilds (32), das eine Vielzahl von Objekten (36) enthält, die einen Inhalt angeben, der in einem Anzeigebereich (30) einer Anzeigeeinheit (110) durch dynamisches Scrollen übergeleitet werden soll,
Detektieren einer Überleitungsmanipulation zum Durchführen einer Überleitungsanzeige des Überleitungsanzeigebilds (32) auf der Informationsverarbeitungsvorrichtung (100),
Berechnen eines Überleitungsmanipulationsausmaßes der detektierten Überleitungsmanipulation und Bestimmen, ob das Überleitungsmanipulationsausmaß gleich oder größer einem Schwellenwert (Xth) ist, und
das Informationsverarbeitungsverfahren **gekennzeichnet ist durch**:
falls das Überleitungsmanipulationsausmaß gleich oder größer dem Schwellenwert (Xth) ist, Überleiten des Überleitungsanzeigebilds **durch** die Überleitungsmanipulation und Anzeigen, im Anzeigebereich (30) der Anzeigeeinheit (110), eines Überleitungszielortbilds (34), das eine Anzeige eines Überleitungszielorts des überzuleitenden Überleitungsanzeigebilds (32) basierend auf dem berechneten Überleitungsmanipulationsausmaß der detektierten Überleitungsmanipulation angibt,
und,
falls das Überleitungsmanipulationsausmaß kleiner als der Schwellenwert (Xth) ist, Überleiten nur des Überleitungsanzeigebilds (32) **durch** die Überleitungsmanipulation, ohne Anzeige des Überleitungszielortbilds (34) im Anzeigebereich,
wobei das Überleitungszielortbild (34) ein Bild ist, das eine Vielzahl von repräsentativen Objekten (38) enthält, die die Objekte (36) angeben, die letztendlich im Anzeigebereich (30) angezeigt werden, nachdem das Überleitungsanzeigebild (32) **durch** die Überleitungsmanipulation übergeleitet wurde.

11. Programm, das die Informationsverarbeitungsvorrichtung nach Anspruch 1 veranlasst, die Verfahrensschritte nach Anspruch 10 zu verwirklichen.

## Revendications

1. Appareil de traitement d'informations (100) comprenant :
une unité d'affichage (110) configurée pour afficher une image d'affichage de transition (32), comprenant une pluralité d'objets (36) indiquant un contenu, à passer dans une zone d'affichage (30) de l'unité d'affichage (110) au moyen d'un défilement inertiel,
une unité de détection (120) configurée pour détecter une entrée de manipulation sur l'appareil de traitement d'informations (100), et
une unité de calcul de quantité de manipulation (142) configurée pour calculer une quantité de manipulation de transition d'une manipulation de transition détectée par l'unité de détection (120) pour réaliser un affichage de transition de l'image d'affichage de transition (32) et pour déterminer si la quantité de manipulation de transition est égale ou supérieure à une valeur de seuil (Xth),
l'appareil de traitement d'informations étant **caractérisé en ce qu'**il comprend en outre :
une unité de commande (146) configurée, si la quantité de manipulation de transition est égale ou supérieure à la valeur de seuil (Xth), pour passer l'image d'affichage de transition par la manipulation de transition et pour afficher, dans la zone d'affichage (30) de l'unité d'affichage (110), une image de destination de transition (34) indiquant l'affichage d'une destination de transition de l'image d'affichage de transition (32) à passer en se basant sur la quantité de manipulation de transition calculée par l'unité de calcul de quantité de manipulation (142) et, si la quantité de manipulation de transition est inférieure à la valeur de seuil (Xth), pour passer seulement l'image d'affichage de transition (32) par la manipulation de transition sans afficher l'image de destination de transition (34) dans la zone d'affichage,
dans lequel l'image de destination de transition (34) est une image qui comprend une pluralité d'objets représentatifs (38) indiquant les objets (36) affichés finalement dans la zone d'affichage (30) après que l'image d'affichage de transition (32) passe par la manipulation de transition.

2. Appareil de traitement d'informations (100) selon la revendication 1, dans lequel, s'il est déterminé qu'une manipulation de sélection est réalisée sur un objet représentatif (38) sur l'image de destination de transition (34), l'unité de commande (146) est configurée pour passer l'image d'affichage de transition (32) affichée sur l'unité d'affichage (110) à l'image d'affichage de transition (32) associée à l'objet représentatif sélectionné (38).

3. Appareil de traitement d'informations (100) selon la revendication 2, dans lequel, en se basant sur la manipulation sur l'image de destination de transition (34), l'unité de commande (146) est configurée pour passer l'image d'affichage de transition (32) à la destination de transition associée à l'image de destination de transition (34) et, ensuite, pour effectuer un processus associé à l'image d'affichage de transition (32).

4. Appareil de traitement d'informations (100) selon la revendication 1, dans lequel l'unité de commande (146) est configurée pour changer une forme d'affichage de l'image de destination de transition (34) en se basant sur la quantité de manipulation de transition.

5. Appareil de traitement d'informations (100) selon la revendication 1, dans lequel l'unité de commande (146) est configurée pour changer une forme d'affichage de l'image de destination de transition (34) en se basant sur une vitesse de transition de l'image d'affichage de transition (32).

6. Appareil de traitement d'informations (100) selon la revendication 1, dans lequel la quantité de manipulation de transition est déterminée en fonction d'une vitesse de manipulation d'un dispositif de manipulation de la manipulation de transition et/ou du nombre de manipulations.

7. Appareil de traitement d'informations (100) selon la revendication 1, dans lequel une vitesse de transition et une quantité de transition auxquelles passe l'image d'affichage de transition (32), sont changées en fonction d'une quantité de manipulation de transition d'une manipulation de transition.

8. Appareil de traitement d'informations (100) selon la revendication 1, dans lequel l'unité de commande (146) est configurée pour changer la granularité de l'image de destination de transition (34), qui est une unité dans laquelle les objets représentatifs (38) sont collectés, en correspondance avec la quantité de manipulation de transition.

9. Appareil de traitement d'informations (100) selon la revendication 1, comprenant en outre une unité de communication.

10. Procédé de traitement d'informations consistant :
à afficher une image d'affichage de transition (32), comprenant une pluralité d'objets (36) indiquant un contenu, à passer dans une zone d'affichage (30) d'une unité d'affichage (110) au moyen d'un défilement inertiel,
à détecter une manipulation de transition pour réaliser un affichage de transition de l'image d'affichage de transition (32) sur l'appareil de traitement d'informations (100),
à calculer une quantité de manipulation de transition de la manipulation de transition détectée et à déterminer si la quantité de manipulation de transition est égale ou supérieure à une valeur de seuil (Xth), et
le procédé de traitement d'informations étant **caractérisé par** :
si la quantité de manipulation de transition est égale ou supérieure à la valeur de seuil (Xth), le fait de passer l'image d'affichage de transition par la manipulation de transition et le fait d'afficher, dans la zone d'affichage (30) de l'unité d'affichage (110), une image de destination de transition (34) indiquant l'affichage d'une destination de transition de l'image d'affichage de transition (32) à passer en se basant sur la quantité de manipulation de transition calculée de la manipulation de transition détectée,
et,
si la quantité de manipulation de transition est inférieure à la valeur de seuil (Xth), le fait de passer seulement l'image d'affichage de transition (32) par la manipulation de transition sans afficher l'image de destination de transition (34) dans la zone d'affichage,
dans lequel l'image de destination de transition (34) est une image qui comprend une pluralité d'objets représentatifs (38) indiquant les objets (36) affichés finalement dans la zone d'affichage (30) après que l'image d'affichage de transition (32) passe par la manipulation de transition.

11. Programme contraignant l'appareil de traitement d'informations selon la revendication 1 à réaliser les étapes du procédé selon la revendication 10.
